Europäisches Patentamt

European Patent Office

Office européen des brevets

(11) Publication number : **0 617 551 A1**

(12) **EUROPEAN PATENT APPLICATION**

(21) Application number : 94302030.5

(22) Date of filing : 22.03.94

(51) Int. Cl.⁵ : **H04N 5/21, H04N 11/00**

(30) Priority : 22.03.93 JP 61632/93
12.04.93 JP 84265/93
28.04.93 JP 102315/93

(43) Date of publication of application :
28.09.94 Bulletin 94/39

(84) Designated Contracting States :
**DE FR GB**

(71) Applicant : **MATSUSHITA ELECTRIC
INDUSTRIAL CO. INC.
1006, Oaza Kadoma
Kadoma-Shi, Osaka (JP)**

(72) Inventor : **Uwabata, Hideyo
5-5-C27-307, Kourigaoka
Hirakata-shi, Osaka (JP)**
Inventor : **Kageyama, Sadashi
2-59-5-203, Minami Kakaburi
Hirakata-shi, Osaka (JP)**

Inventor : **Hayashi, Takaya
13-4, Nozoe 1-chome
Nagaokakyo-shi, Kyoto (JP)**
Inventor : **Ogata, Yasuyo
2-12-35, Mishimaoka
Ibaraki-shi, Osaka (JP)**
Inventor : **Kisoda, Akira
4-3, Kaji-machi 3-chome
Moriguchi-shi, Osaka (JP)**
Inventor : **Hayashi, Kenichiro
4-10-207, Ikuno
Katano-shi, Osaka (JP)**
Inventor : **Handa, Koji
3-14-102, Miyuki Higashi-machi
Neyagawa-shi, Osaka (JP)**
Inventor : **Yasumoto, Yoshio
2-2-1, Shoyodai
Nara-shi, Nara-ken (JP)**

(74) Representative : **Senior, Alan Murray
J.A. KEMP & CO.,
14 South Square,
Gray's Inn
London WC1R 5LX (GB)**

(54) **Waveform equalizer.**

(57) A transmitter transmits a composite video signal and a multiplex signal on video carrier in a quadrature modulation method. A receiver synchronously detects an incoming signal with two orthogonal axes and separates the composite video signal from the multiplex signal to separately demodulate them. A crosstalk eliminator circuit to which the separately demodulated composite video signal and multiplex signal are supplied is connected in series with the ghost eliminator to eliminate ghost of the multiplex signal after eliminating crosstalk from the composite video signal to the multiplex signal. A waveform-equalized signal is obtained by adding a signal of only an inverse characteristic of crosstalk from the multiplex signal to the composite video signal with a decoded video signal. A non-linear extractor extracts non-linear crosstalk from the composite video signal, thereby obtaining a waveform-equalized multiplex signal by subtracting the non-linear crosstalk from the composite video signal to the multiplex signal from it.

FIG. 1

QUADRATURE DEMODULATOR — CROSSTALK ELIMINATOR — GHOST ELIMINATOR

EP 0 617 551 A1

The present invention relates, in general, to a television transmission system where a composite video signal, which is compatible with the existing television broadcasting system and effective to improve the picture quality and expand the picture aspect ratio, that is, a ratio of a longitudinal length to a transversal length of the picture, and a multiplex signal, which is effective to improve sound quality, are transmitted, more specifically to a waveform equalizer made use to regenerate such composite video signal and multiplex signal without interference on a receiver side in the television transmission system.

Nearly forty years has been passed since a color television broadcasting in the present NTSC (National Television System Committee) system started. During which, a demand of viewers for high-definition picture gradually increased and various new television systems has been proposed with improvement in performance of a television receiver.

Contents of programs provided to the viewers themselves are changing from mere studio programs or relay programs to pictures in a higher picture quality and with realism such as movie pictures in a cinema size. In recent years, a demand for a high quality sound or data broadcasting is increased more and more. The present broadcasting system has certain specifications (refer to, for example, "US Color Television Fundamentals - A Review", IEEE Trans. Consumer Electron., vol. CE-23.pp.467-478, Nov. 1977) such as 525 scanning lines, 2:1 interlaced scanning, 4.2 MHz luminance signal horizontal bandwidth and 4:3 aspect ratio. Under such circumstances, the first generation EDTV broadcasting system started in 1989 in Japan, whose major contents were maintenance of compatibility with the present television broadcasting system, transmission of reference signals for the purpose of providing a high quality picture or eliminating ghost disturbance.

Wide screen is considered to be the second EDTV system. There is, for example, a system for widening the screen where video signals of 480 active scanning lines per frame is made 360 on the receiver side and each upper and lower 60 lines are superimposed signals thereon which used to compensate vertical components of the video signals. This is one example of a so-called letter box system. This letter box system enables transmission of a wide aspect picture (with an aspect ratio of 16:9) while maintaining the compatibility with the present television broadcasting system. There is another proposal to transmit PCM sound in another multiplex transmission line. As this multiplex transmission line, a quadrature modulation for the video carrier comes up.

The quadrature modulator for the video carrier is a system where multiplex signals of about 1 MHz are transmitted while maintaining compatibility with the present NTSC system (refer to, for example, "An extended definition television system using quadrature modulation of the video carrier with inverse Nyquist filter", IEEE Trans. Consumer Electron., Vol, CE-33, pp.173-180, Aug. 1987). In this system, an orthogonal carrier wave that is perpendicular to the conventional video carrier is modulated in a carrier suppression amplitude modulation with a multiplex signal whose band is about 1 MHz, band-liminted by an inverse Nyquist filter whose amplitude characteristic is odd symmetry with the Nyquist filter of a general television receiver, then added with a NTSC signal which has been vestigial-sideband modulated as same as in the conventional manner to be transmitted. When received by a general NTSC receiver, such signal becomes double-sideband since the Nyquist filter limits the band of the signal, being thus free from disturbance from the multiplex signal if a synchronous detector is used. Consequently, the receiver can receive a picture as it was and the compatibility can be kept. Hereinafter, this system will be referred as a quadrature modulating system. As a multiplex signal, there would be a high-definision picture signal, a PCM sound signal, etc.

Such quadrature modulating system is excellent as a device to transmit a multiplex signal while maintaining the compatibility with the present television broadcasting system. For the reason of characteristics of the quadrature modulation, transmission distortion, insufficient modulating process in the receiver or the like sometimes causes crosstalk between the composite video signal and a multiplex signal. Ghost may affect as same as the conventional NTSC signals. To solve these problems, we have proposed to insert a GCR signal to eliminate ghost during the vertical retrace line interval of the multiplex signal (refer to, for example, "Waveform Equalization for EDTV System using QAM", Uwabata et.al., IEEE Trans. Consumer Electron., Vol.CE-37 pp.753-762. Nov. 1991).

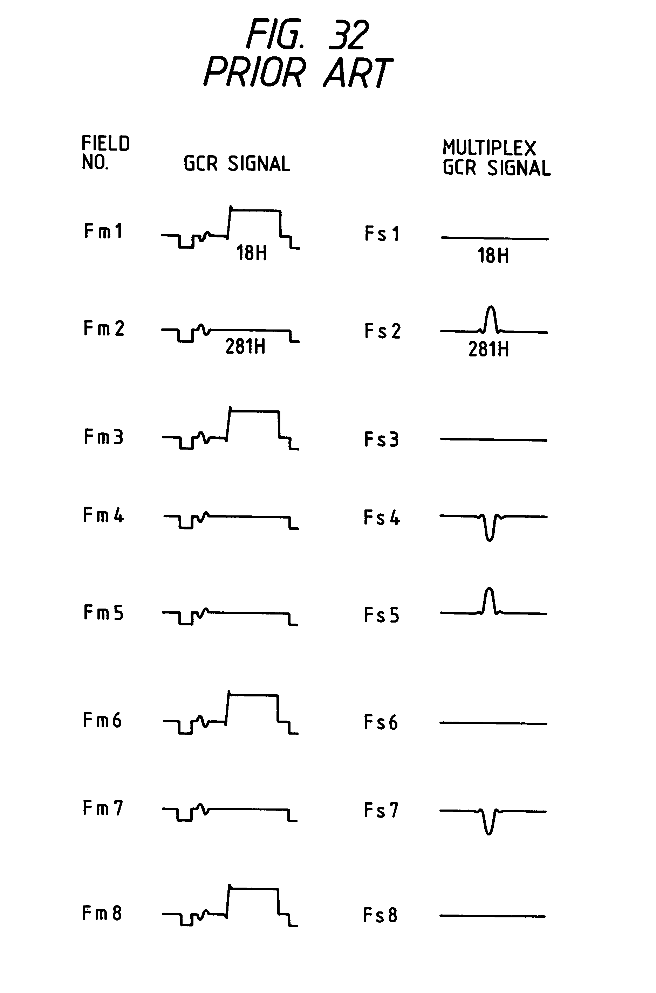

Referring now to FIG. 32, there are shown waveforms of a GCR signal transmitted in the first generation EDTV broadcasting system and a GCR signal employed in the above proposal. As shown, a reference signal used to eliminate ghost, that is, a GCR signal consists of a sinX/X raised bar signal and a zero IRE pedestal signal. These are transmitted in an 8-field sequence. On a receiver side, the reference signal is calculated in the following Formula (1) to be extracted:

$$((Fm1 - Fm5) + (Fm6 - Fm2) + (Fm3 - Fm7) + (Fm8 - Fm4))/4 \quad (1)$$

This arithmetic operation allows synchronous signal or burst to be got rid of. If the previous line has the same waveform in every field or every frame, a signal in the previous line may also be got rid of. Therefore, a signal flat over two horizontal scanning intervals excepting the sinX/X bar signal is available. Use of this signal permits ghost delayed up to about 45 µsec. to be eliminated.

A reference signal used to eliminate ghost of the multiplex signal superimposes a GCR signal of the mutliplex signal whose polarlity is alternately reversed (hereinafter referred as a multiplex GCR signal) on the multiplex signal while the GCR signal of a NTSC signal is a zero IRE pedestal signal. As shown in FIG. 32, if the GCR signal is calculated according to Formula (1), the superimposition of the multiplex GCR signal on the multiplex signal does not exert affect upon a ghost canceller as it did.

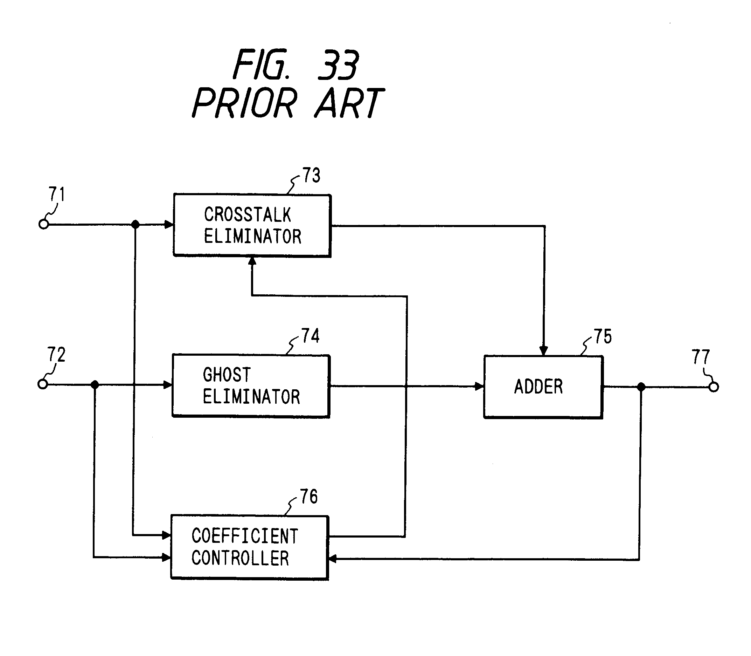

Hereinafter, description will be made of a waveform equalizer in the above proposal previously made to eliminate both crosstalk from a composite video signal to a multiplex signal and ghost of the multiplex signal, referring to accompanying drawings. FIG. 33 is a block diagram of the previously proposed waveform equalizer, which comprises a composite vide signal input terminal 71, a multiplex signal input terminal 72, a crosstalk eliminating filter 73, a ghost eliminating filter 74, a adder 75, a coefficient controller 76 and a multiplex signal output terminal 77 outputting a multiplex signal whose waveform has been equalized. A quadrature-modulated signal transmitted over is quadrature-demodulated and separated into a composite video signal and a multiplex signal on a receiver side. The separated composite vide signal is fed to the composite video signal input terminal 71 and the separated multiplex signal is fed to the multiplex signal input terminal 72. The crosstalk eliminating filter 73 is applied both the composite video signal outputted from the composite video signal input terminal 71 and a coefficient outputted from the coefficient controller 76, and generates a signal having an inverse characteristic of crosstalk from the composite video signal to the multiplex signal to output it. The ghost eliminating filter 74 is applied both the multiplex signal outputted from the multiplex signal input terminal 72 and another coefficient outputted from the coefficient controller 76, and outputs a multiplex signal whose ghost has been eliminated. The adder 75 adds an output from the crosstalk eliminating filter 73 to an output from the ghost eliminating filter 74. The adder 75 outputs a signal in which both the crosstalk from the composite signal to the multiplex signal and the ghost of the multiplex signal have been removed to the waveform equalized multiplex signal output terminal 77.

Next, operation of the coefficient controller 76 will be described referring to FIG. 32. In the case of elimination of crosstalk from the composite signal to the multiplex signal, the first step is to detect a period for which a GCR signal shown in FIG. 32 is superimposed from a signal outputted from the composite video signal input terminal 71 and carry out a calculation according to Formula (1). The next step is to detect a period for which a multiplex GCR signal shown also in FIG. 32 is superimposed from a signal outputted from the multiplex signal input terminal 72 and carry out a calculation by Formula (2):
$$((Fs1 - Fs5) + (Fs6 - Fs2) + (Fs3 - Fs7) + (Fs8 - Fs4))/4 \quad (2)$$

A signal determined through Formula (2) is the crosstalk to the multiplex signal. That is, this is a signal including only the crosstalk from the composite video signal to the multiplex signal.

The coefficient controller 76 determines a coefficient that is of an inverse characteristic to the crosstalk from the composite video signal to the multiplex signal by use of the signal determined through Formulae (1) and (2), then outputs it to the crosstalk eliminating filter 73.

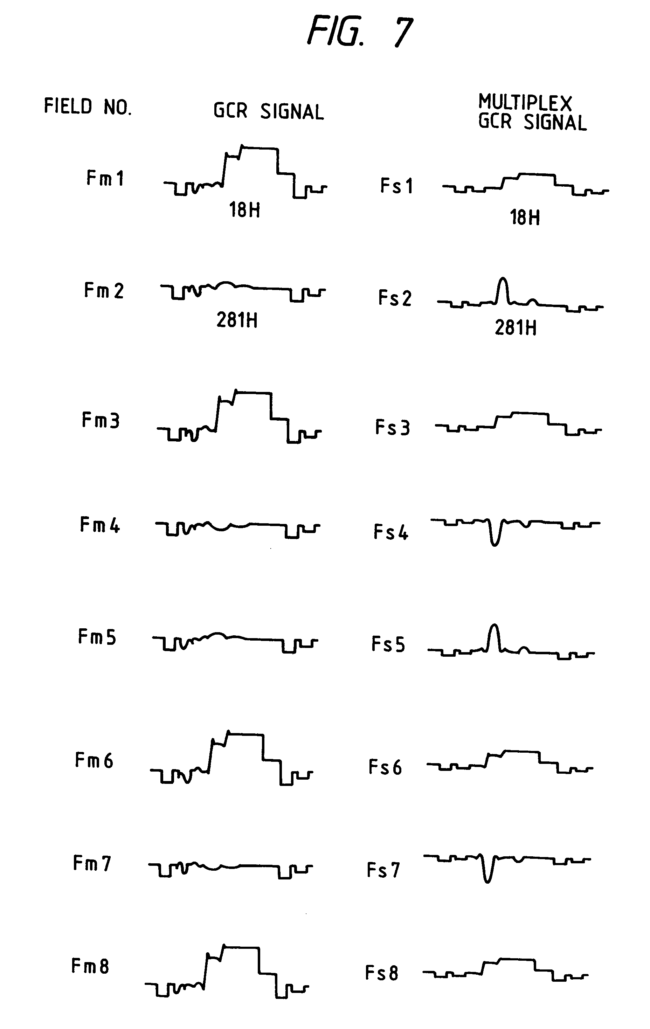

In the case of elimination of ghost of the multiplex signal, the first step is to detect a period for which a multiplex GCR signal shown in FIG. 7 is superimposed from a signal outputted from the multiplex signal input terminal 72 and carry out a calculation by Formula (3):
$$(Fs2 - Fs4 + Fs5 - Fs7)/4 \quad (3)$$

A signal determined through Formula (3) includes only the multiplex signal and its ghost.

The coefficient control circuit 76 determines another coefficient to eliminate the ghost of the multiplex signal using a signal determined through Formula (3), then outputs it to the ghost eliminating filter 74.

The above steps are repeated until the crosstalk from the composite video signal to the multiplex signal and the ghost of the multiplex signal become minimal.

The above previously proposed waveform equalizer has a certain disadvantage. If the ghost and the crosstalk both develop, the coefficient controller 76 outputs a coefficient used to eliminate the ghost from the multiplex signal. At this time, the ghost eliminating filter 74 exerts an affect on the crosstalk from the composite video signal to the multiplex signal that has been present in the multiplex signal. This causes an increase of the crosstalk from the composite video signal to the multiplex signal. Therefore, the coefficient control circuit 76 needs to output a coefficient sufficient to eliminate not only the crosstalk from the composite signal to the multiplex signal but also the increased crosstalk to the crosstalk eliminating filter.

As a result, it was impossible to calculate a coefficient used to eliminate the ghost of the multiplex signal and another coefficient used to eliminate the crosstalk from the composite signal to the multiplex signal, separately.

The waveform equalizer previously proposed has another disadvantage.

Many of commercially available television receivers convert an analog signal into a digital signal with a sampling clock four times the clock of the chrominance subcarrier (hereinafter referred as 4 fsc). Similarly, a ghost canceller used to eliminate ghost on a television signal in the commercially available television also employs a sampling clock of 4 fsc. If ghost up to about 45 micro second is to be eliminated using an existing GCR signal, the transversal filter needs, more or less, 640 of taps. The circuit size of the existing ghost canceller depends on the number of the taps in the transversal filter. When a multiplex signal is transmitted in the quadrature modulation technique, crosstalk develops between a composite video signal and a multiplex signal due to presence of ghost. The existing ghost canceller is useful to eliminate ghost of the composite video signal. However, when the crosstalk from the multiplex signal to the composite video signal is to be eliminated, a crosstalk canceller needs the same number of taps with the existing ghost canceller to accomplish the same elimination range for the ghost as the existing ghost canceller. This results in a large circuit size of a television receiver for receiving a multiplex signal transmitted in the quadrature modulation technique.

The previously proposed waveform equalizer also has still another disadvantage. As stated above, the waveform equalizer eliminates ghost of the multiplex signal and crosstalk from the composite video signal to the multiplex signal. The problem is that the waveform equalizer can eliminate linear components of the crosstalk from the composite video signal to the multiplex signal, but not nonlinear components.

An object of the present invention is to provide a waveform equalizer useful to separately eliminate crosstalk from a multiplex signal to a composite video signal and ghost of the multiplex signal.

Another object of the present invention is to provide a waveform equalizer of a smaller circuit size useful to eliminate crosstalk from the multiplex signal to the composite video signal.

Still another object of the present invention is to provide a waveform equalizer useful to eliminate nonlinear crosstalk from the composite video signal to the multiplex signal.

SUMMARY OF THE INVENTION

According to an aspect of this invention, there is provided a waveform equalizer comprising a quadrature demodulator synchronously detecting a signal having been converted into a specific frequency on a receiver side with two orthogonal axes, separating it into a composite video signal and a multiplex signal and demodulating them, a crosstalk eliminator applied a composite video signal and a multiplex signal to eliminate crosstalk from the composite video signal to the multiplex signal, and a ghost eliminator eliminating ghost of the multiplex signal from an output of the crosstalk eliminator. Preferably, the waveform equalizer according to this invention comprises a quadrature demodulator synchronously detecting a signal having been converted into a specific frequency on a receiver side with two orthogonal axes, separating it into a composite video signal and a multiplex signal and demodulating them, a crosstalk eliminator applied the composite video signal and the multiplex signal to eliminate crosstalk from the composite video signal to the multiplex signal, a ghost eliminator eliminating ghost of the multiplex signal from an output of the crosstalk eliminator, and an interference eliminator applied the composite video signal and an output of the ghost eliminator to eliminate at least either one of ghost of the composite video signal or crosstalk from the multiplex signal to the composite video signal.

With the above arrangement, it is possible to separately eliminate the ghost of the multiplex signal and the crosstalk from the composite video signal to the multiplex signal in a short time so as to correctly regenerate the multiplex signal in a system transmitting the multiplex signal using a quadrature modulation method for a video carrier within a standard band for the present television broadcasting. It is also possible to regenerate a composite video signal in which ghost of the composite video signal and crosstalk from a multiplex signal to the composite video signal have been removed.

According to another aspect of this invention, there is provided a waveform equalizer comprising a quadrature demodulator receiving a composite signal composed of a signal obtained by vestigial-sideband modulating a first video carrier with a composite video signal inserted a first reference signal and a signal obtained by carrier-suppression-amplitude modulating a second orthogonal carrier that is perpendicular to the first video carrier with a multiplex signal inserted a second reference signal, synchronously detecting a signal having been converted into a specific frequency with two orthogonal axes, separating it into a composite video signal and a multiplex signal and demodulating them, a first A-D converter sampling the composite video signal at a frequency f0 and converting it into a digital signal, a second A-D converter sampling the multiplex signal at a frequency f1 and converting it into a digital signal, a delay circuit delaying an output of the first A-d converter, a first lowpass filter eliminating unnecessary high frequency components from an output of the first A-D converter, a first sampling converter sampling-converting an output of the first lowpass filter, a first transversal filter applied an output of the first sampling converter and at least one coefficient Mc from a coefficient controller, a second transversal filter applied an output of the second A-D converter and at least one coefficient Sc from the coefficient controller, a first adder adding an output of the first transversal filter with an output of the second transversal filter, a second sampling converter sampling-converting an output of the first adder, a second lowpass filter eliminating an unnecessary signal from an output of the second sampling converter, a second adder adding an output of the second lowpass filter with an output the delay circuit, the coefficient controller applied an output of the first sampling converter, an output of second A-D converter and at least either one of an output of the first adder or an output of the second adder to output the coefficients Mc and Sc.

With the above arrangement, it is possible to minimize crosstalk from the composite video signal and correctly and efficiently transmit a multiplex signal such as a digital sound signal utilizing a quadrature modulating method for video carrier within a standard band of the present television broadcasting. It is also possible to largely reduce the number of the transversal filters in the waveform equalizing circuit eliminating crosstalk from the multiplex signal to the composite video signal, thereby enabling demodulation of a decoded video signal in which crosstalk from the multiplex signal to the decoded video signal has been removed in a small-sized circuit.

According to still another aspect of this invention, there is provided a waveform equalizer used in a quadrature modulation method for a video carrier comprising a delay circuit delaying a waveform equalized multiplex signal a predetermined period and outputting it, a non-linear extractor extracting non-linear components of crosstalk from the waveform-equalized multiplex signal and outputting them, and a subtractor subtracting output signal data of the non-linear extractor from output signal data of the delay circuit and outputting a result. The waveform equalizer preferably made use in a quadrature modulation method for a video carrier comprises a delay circuit delaying a waveform-equalized multiplex signal a predetermined period and outputting it, a non-linear extractor extracting non-linear components from the waveform equalized multiplex signal and outputting them, a subtractor subtracting output signal data of the non-linear extractor from output signal data of the delay circuit and a binary converter converting the multiplex signal into a binary data and outputting it.

With the above arrangement, it is possible to eliminate non-linear components of crosstalk from a composite video signal to a multiplex signal from a waveform-equalized multiplex signal.

The present invention will be further described hereinafter with reference to the following description of exemplary embodiments of the accompanying drawings, in which:-

Fig. 1 is a block diagram of a waveform equalizer according to a first embodiment of this invention;

Fig. 2 is a block diagram of another waveform equalizer according to a second embodiment of this invention;

Fig. 3 is a block diagram of still another waveform equalizer according to a third embodiment of this invention;

Fig. 4 is a block diagram of a crosstalk eliminator according to this invention;

Fig. 5 is a block diagram of a ghost eliminator according to this invention;

Figs. 6A, 6B and 6C are block diagrams of three types of interference eliminator according to this invention;

Fig. 7 shows waveforms of an existing GCR signal and a multiplex GCR signal when ghost and crosstalk develop between a decoded video signal and a multiplex signal;

Fig. 8 is a block diagram of a transmitter according to this invention;

Fig. 9 is a block diagram of a quadrature demodulator according to this invention;

Fig. 10 is a block diagram of still another waveform equalizer according to a fourth embodiment of this invention;

Fig. 11 is a block diagram of still another waveform equalizer according to a fifth embodiment of this invention;

FIG. 12 is a block diagram of still another waveform equalizer according to a sixth embodiment of this invention;

FIG. 13 is a block diagram of still another waveform equalizer according to a seventh embodiment of this invention;

FIG. 14 is a block diagram of a coefficient controller according to this invention;

FIG. 15 is a block diagram of a transversal filter according to this invention;

FIG. 16 is a block diagram of still another waveform equalizer according to an eighth embodiment of this invention;

FIG. 17 is a block diagram of still another waveform equalizer according to a ninth embodiment of this invention;

FIG. 18 is a block diagram of still another waveform equalizer according to a tenth embodiment of this invention;

FIG. 19 is a block diagram of a non-linear extractor according to this invention;

FIG. 20 is a block diagram of another non-linear extractor according to this invention;

FIG. 21A is a block diagram of a binary converter according to this invention;

FIG. 21B is a block diagram of another binary converter according to this invention;

FIG. 22 is a block diagram of the waveform equalizer according to the eighth embodiment in which a waveform equalizing circuit is omitted;

FIG. 23 is a block diagram of the waveform equalizer according to the ninth embodiment in which a waveform equalizing circuit is omitted;

FIG. 24 is a block diagram of the waveform equalizer according to the tenth embodiment in which a waveform equalizing circuit is omitted;

FIG. 25 is a block diagram of a multiplex signal source according to this invention;

FIG. 26A shows a waveform of a multiplex signal before D-A converted;

FIG. 26B shows a waveform of a D-A converted multiplex signal;

FIG. 27A schematically shows an analog waveform of a received multiplex signal;

FIG. 27B schematically shows a quadrature-demodulated multiplex signal;

FIG. 28A shows a waveform of a composite video signal to be transmitted;

FIG. 28B shows a waveform of a multiplex signal on which transmitted data are superimposed;

FIG. 28C shows a waveform of a distorted multiplex signal due to linear crosstalk from the composite video signal shown in FIG. 28A;

FIG. 28D shows a waveform of a distorted multiplex signal due to linear crosstalk from the composite video signal shown in FIG. 28A, non-linear crosstalk appearing in a synchronous signal portion of the composite video signal;

FIG. 28E shows a waveform of the multiplex signal in FIG. 28D whose waveform has been equalized, in which linear components of the crosstalk from the composite video signal to the multiplex signal has been eliminated but non-linear components still remain;

FIG. 28F shows a waveform of the multiplex signal in which the non-linear crosstalk appeared while no data was superimposed thereon still remains;

FIG. 29A shows a waveform of a multiplex signal inputted to the binary converter;

FIG. 29B illustrates how to compare an absolute value of a multiplex signal with a threshold value;

FIG. 29C shows a waveform of a binary converted multiplex signal;

FIG. 30A shows a waveform of a multiplex signal inputted to the binary converter;

FIG. 30B illustrates how to compare a multiplex signal with threshold values U and L;

FIG. 30C shows a waveform of a binary converted multiplex signal;

FIG. 31A shows a waveform-equalized multiplex signal having been distorted due to non-linear crosstalk appearing in a synchronous signal portion of a composite video signal;

FIG. 31B shows a waveform of a multiplex signal in FIG. 31A on which no data is superimposed;

FIG. 31C shows waveforms of threshold values U and L set by a threshold setting circuit;

FIG. 31D illustrates how to compare data of a multiplex signal with the threshold values U and L;

FIG. 31E shows a waveform of a binary-converted multiplex signal;

FIG. 32 shows waveforms of a conventional GCR signal and a multiplex GCR signal; and

FIG. 33 is a block diagram of a conventional waveform equalizer.

## DESCRIPTION OF THE PREFERRED EMBODIMENTS

Hereinafter, a waveform equalizer according to a first embodiment of this invention referring to accompanying drawings.

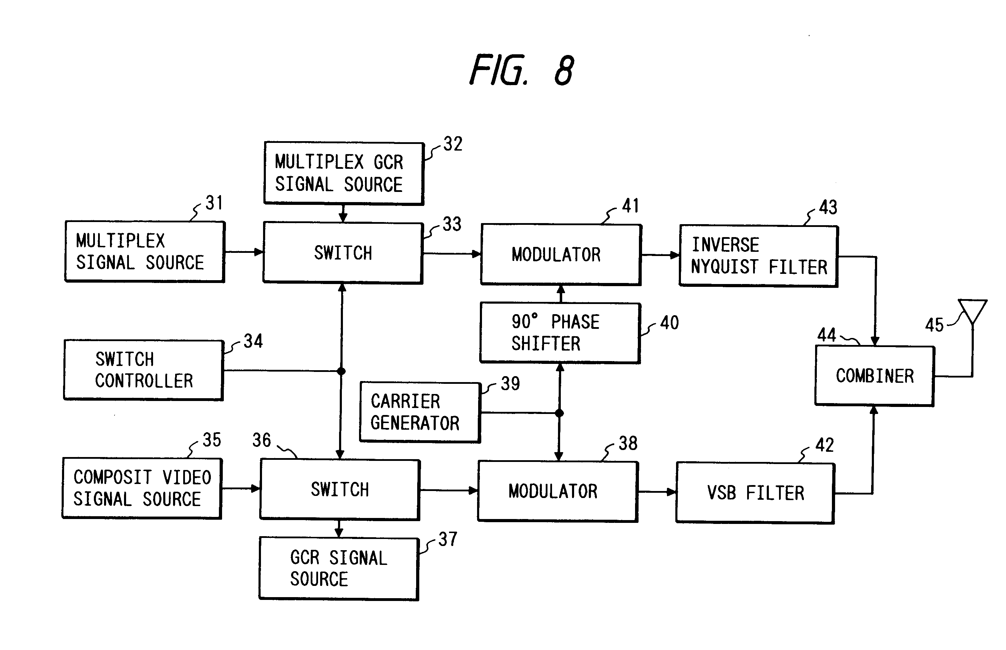

Referring now to the drawings, wherein like reference characters designate corresponding parts throughout the views, FIG. 8 is a block diagram of a transmitter according to this invention. In FIG. 8, the receiver comprises a transmitting antenna 45, a multiplex signal source 31, a composite video signal source 35, a multiplex GCR signal source 32, a GCR signal source 37, a switch controller 34, switches 33 and 36, modulators 38 and 41, a carrier generator 39, a 90° phase shifter 40, an inverse Nyquist filter 43, a VSB filter 42 and a combiner 44. Meanwhile, the multiplex signal source 31 generates a signal in a frequency band of 1.0 MHz and without direct current components, which corresponds to a digitized audio signal or the like. The composite video signals source 35 generates a composite video signal of NTSC. The multiplex signal source 35 is switched by the switch 33 to the multiplex GCR signal source 37, while the composite video signal source 35 is switched by the switch 36 to the GCR signal source 37. These switching operations are controlled by the switch controller 34 to, in general, insert a GCR signal only during one horizontal scanning period in the vertical retrace line interval. As a GCR signal for the composite video signal and a multiplex GCR signal for the multiplex signal, what are shown in FIG. 32 are used. Outputs of the switches 33 and 36 are quadrature-modulated by the modulator 38 and the modulator 41. An output carrier of the carrier generator 39 is fed to the modulator 38 and the modulator 41 through the 90° phase shifter 40. The modulators 41,38, therefore, serve in combination as a quadrature modulator. After passing through the inverse Nyquist filter 43 and the VSB filter 42, a modulated multiplex signal and a modulated composite video signal are combined by the combiner 44 to become a combined demodulated signal. The transmitting antenna 35 transmits the combined modulated signal.

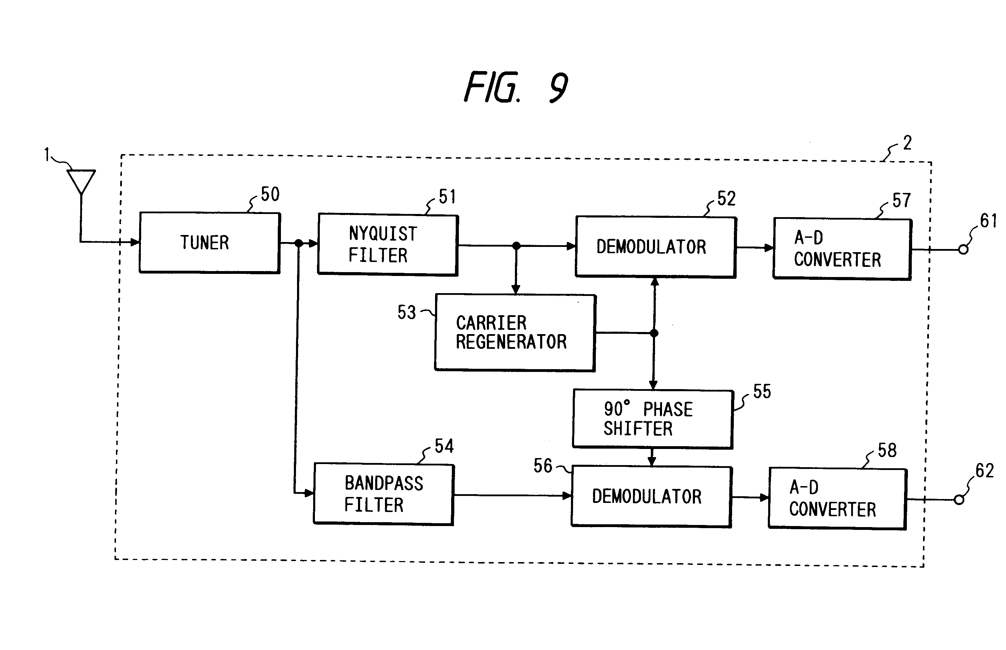

A signal processing means on the receiving side will be next described referring to the drawings. FIG. 9 is a block diagram showing a structure of a quadrature demodulator according to an embodiment of this invention. In FIG. 9, the quadrature demodulator 2 comprises an antenna 1, a tuner 50, a Nyquist filter 51, a bandpass filter 54, demodulators 52,56, a 90° phase shifter 55, a carrier regenerator 53, A-D converters 57,58 and output terminals 61,62. The quadrature demodulator 2 with the above arrangement operates in the following fashion. The tuner 50 receives a transmitted combined demodulated signal through the antenna 1 and outputs it to both the Nyquist filter 51 and the bandpass filter 54. The signal having been passed through the Nyquist filter 51 is demodulated by the demodulator 52. On the other hand, the signal having been passed through the bandpass filter 54 is demodulated by the demodulator 56. At this time, the carrier regenerator 53 regenerates a carrier wave from a demodulated composite video signal and supplies it to both the demodulator 52 and the 90° phase shifter 55. The 90° phase shifter 55 supplies the carrier wave whose phase was shifted 90° to the demodulator 56. The demodulators 52,56 are, therefore, supplied the orthogonal carrier waves whose phases are perpendicular to each other to carry out a quadrature demodulation. A demodulated composite video signal is converted into a digital signal by the A-D converter 57, then outputted from the output terminal 61. A demodulated multiplex signals is, on the other hand, converted also into a digital signal by the A-D converter 58, then outputted from the output terminal 62.

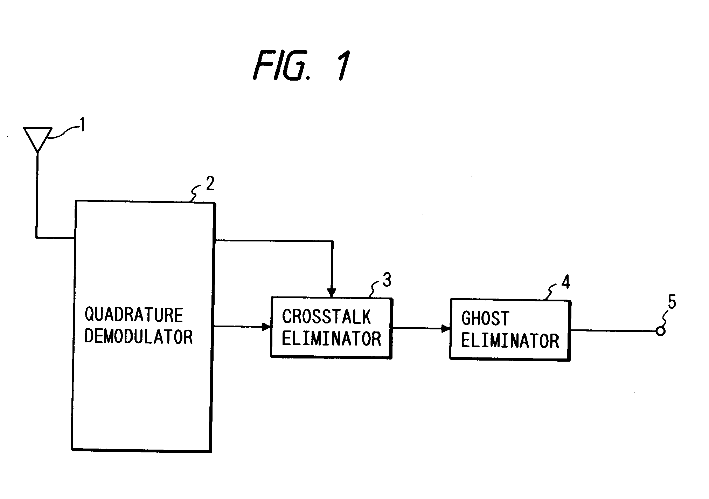

FIG. 1 is a block diagram of a waveform equalizer according to a first embodiment of this invention. In FIG. 1, the waveform equalizer comprises a receiving antenna 1, a quadrature demodulator 2, a crosstalk eliminator 3, a ghost eliminator 4 and a multiplex signal output terminal 5 outputting a multiplex signal whose waveform has been equalized.

Hereinafter, a mutual relationship and operation of the above elements forming the waveform equalizer will be described. A transmitted combined demodulated signal is received by the antenna 1. The quadrature demodulator 2 demodulates the incoming combined demodulated signal and separates it into a composite video signal and a multiplex signal. The composite video signal and the multiplex signal are separately fed to the crosstalk eliminator 3. The crosstalk eliminator 3 eliminates crosstalk affecting from the composite video signal on the multiplex signal, and outputs a crosstalk-eliminated signal to the ghost eliminator 4. The ghost eliminator 4 eliminates ghost from the signal outputted from the crosstalk eliminator 3, then outputs a multiplex signal whose waveform has been equalized to the multiplex signal output terminal 5.

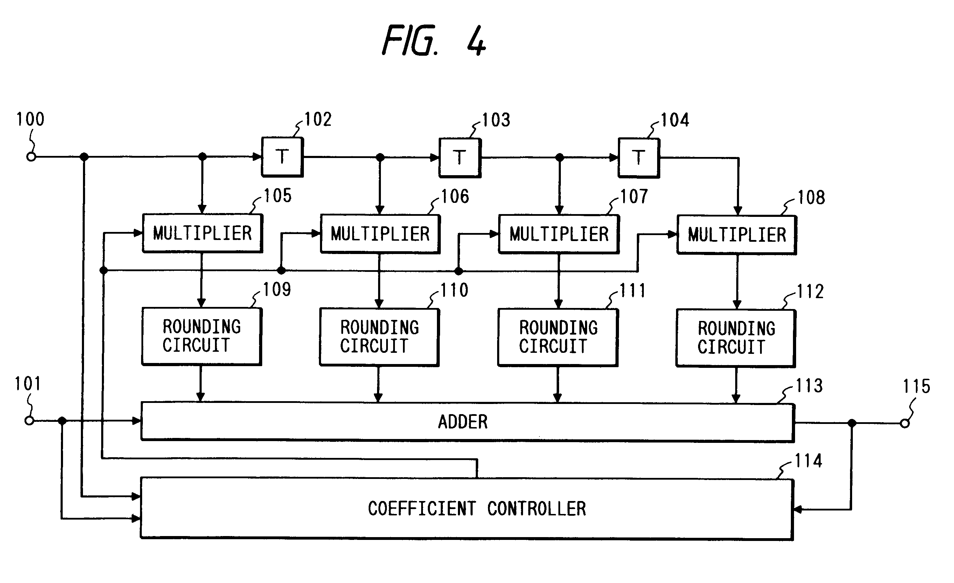

An internal structure of the crosstalk eliminator 3 is now described referring to FIG. 4. In FIG. 4, the crosstalk eliminator 3 comprises a composite video signal input terminal 100, a multiplex signal input terminal 101, delay elements 102, 103 and 104, multipliers 105, 106, 107 and 108, rounding circuits 109. 110, 111 and 112, an adder 113, a coefficient controller 114 and a multiplex signal output terminal 115 outputting a multiplex signal without crosstalk. Incidentally, all signal processings inside the crosstalk eliminator 2 are carried out in a from of two's complement in order to treat both positive and negative numbers. For the sake of simplicity, here are employed a digital input signal of 8 bit, a digital signal whose coefficient is 10 bit and three delay elements. The delay elements 102, 103 and 104 delay an input signal supplied from the composite video signal input terminal 100 one sampling interval, respectively, and outputs it to each of the multipliers 105, 106, 107 and 108. Coefficient data C0, C1, C2 and C3 outputted from the coefficient control circuit 104 are in advance set to the multiplier 105, 106, 107 and 108, respectively. The multiplier 105 outputs a signal obtained by multiplying an input signal with a retaining coefficient C0. The multipliers 106, 107 and 108 also output signals obtained by multiplying input signals with retaining coefficients C1, C2 and C3, respectively. In the case of four multipliers, address for the coefficient needs 2 bit. An output from the multiplier 105 is rounded by the rounding circuit 109. When the signals are processed in a form of two's complement, a result obtained by multiplying a signal of 8 bit with a signal of 10 bit is of 17 bit. In the case of 64 multipliers, outputs from the multipliers are summed without being rounded, a result becomes 23 bit. In practice, the resultant output is rounded to limit the number of output bit for the purpose of circuit integration. Outputs from the multiplier 105, 106, 107 and 108 are rounded by the rounding circuits 109, 110, 111 and 112, respectively. The adder 13 sums outputs from the rounding-off circuits 109, 110, 111 and 112 with a signal applied from the multiplex signal input terminal and outputs a result of the summation as a signal without crosstalk to the multiplex signal output terminal 115. The coefficient controller 114 determines a coefficient that can realize an inverse characteristic of the crosstalk from the composite video signal to the multiplex signal, and outputs it to each of the multipliers 105, 106, 107 and 108.

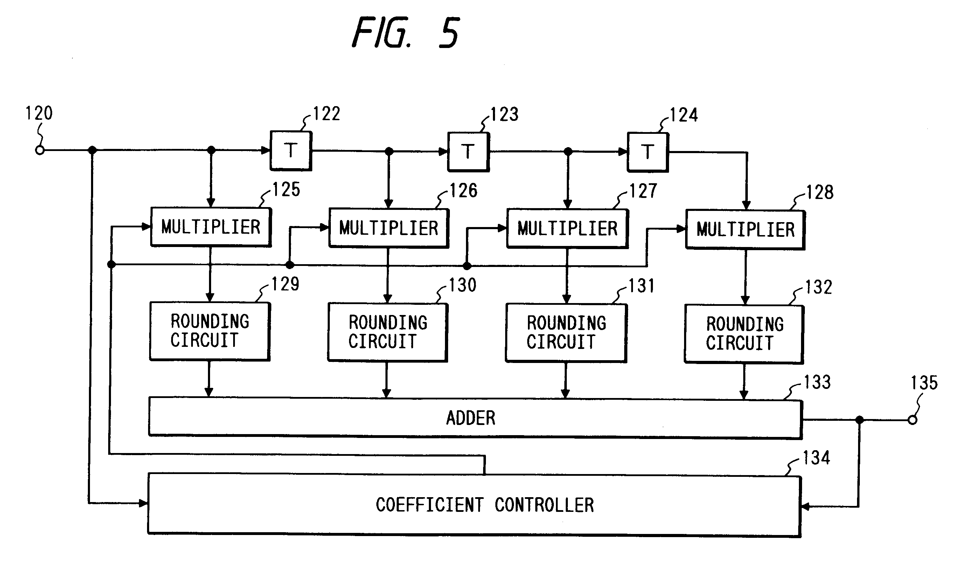

An internal structure of the ghost eliminator 4 will be now described referring to FIG. 5. In FIG. 5, the ghost eliminator 4 comprises a multiplex signal input terminal 120, delay elements 122, 123 and 124, multipliers 125, 126, 127 and 128, rounding circuits 129, 130, 131 and 132, an adder 133, a coefficient controller 134 and a multiplex signal output terminal 135 outputting a signal whose ghost has been eliminated. Signal processings inside the ghost eliminator are all carried out in a form of two's complement in order to process both positive and negative numbers. For the sake of simplicity, here are employed a digital signal in 8 bit as an input signal, a digital signal whose coefficient is in 10 bit and three delay elements. The delay elements 122, 123 and 124 delay signals received through the multiplex input terminal 120 by one sampling interval, respectively, and output them to each of the multipliers 126, 127 and 128. Coefficient data C0, C1, C2 and C3 outputted from the coefficient controller 134 are in advance set to the multipliers 125, 126, 127 and 128, respectively. The multiplier 125 outputs a signal obtained by multiplying an input signal with the retaining coefficient C0. The multipliers 126, 127 and 128 also output signals obtained by multiplying the outputs from the delay elements 122, 123 and 124 with the coefficients C1, C2 and C3, respectively. In the case of four multipliers, address for the coefficient needs 2 bit. An output from the multiplier 125 is rounded by the rounding-off circuit 129. Outputs from the multipliers 125, 126, 127 and 128 are also rounded by the rounding circuits 129, 130, 131 and 132, respectively. The adder 133 sums outputs from the rounding circuits 129, 130, 131 and 132 and outputs a result of the summation to the ghost eliminated multiplex signal output terminal 135. The coefficient controller 134 determines a coefficient that is effectively used to eliminate the ghost of the multiplex signal from a signal outputted from the multiplex signal input terminal 120 and an output from the adder 133, and outputs it to each of the multipliers 125, 126, 127 and 128.

FIG. 7 shows a GCR signal and a multiplex GCR signal when crosstalk and ghost both generate between a decoded video signal and a multiplex signal. When both the crosstalk and ghost generate between the decoded vide signal and the multiplex signal, the crosstalk and ghost appear in the GCR signal and the multiplex GCR signals as shown in FIG. 7. If the waveforms shown in FIG. 7 are once reformed to waveforms shown in FIG. 32, the crosstalk and ghost between the decoded video signal and the multiplex signals could have been eliminated. In the case of elimination of the crosstalk from the composite vide signal to the multiplex signal, a first step is to detect a period for which the GCR signal shown in FIG. 7 is superimposed from a signal supplied from the composite video signal input terminal 100, then carry out a calculation using Formula (1). The next step is to determine a period for which a multiplex GCR signal shown in FIG. 7 is superimposed from a signal supplied from the multiplex signal input terminal 101, then carry out a calculation using Formula (2). A signal determined through Formula (2) is the crosstalk of the signal determined through Formula (1) to the multiplex signal. In other words, this is a signal including only components of the crosstalk from the composite video signal to the multiplex signal. The coefficient controller 114, therefore, determines a coefficient that is of an inverse characteristic of the crosstalk from the composite video signal to the multiplex signal by using a signal determined through Formulae (1) and (2), and outputs the resulting coefficient to each of the multipliers 105, 106, 107 and 108.

In the case of elimination of ghost of the multiplex signals, the first step is to detect a period for which the multiplex GCR signal shown in FIG. 7 is superimposed from a signal outputted from the multiplex signal input terminal 120, then carry out a calculation using Formula (3). A signal determined through Formula (3) includes components of only the multiplex signal and its ghost. The coefficient controller 134, therefore, determines a coefficient that is used to eliminate the ghost of the multiplex signal by using a signal determined through Formula (3), then outputs it to each of the multipliers 125, 126, 127 and 128.

The above steps are repeated until the crosstalk from the multiplex signals to the composite signal and the ghost of the multiplex signals become minimal.

The above operation in the above structure shown in FIG. 1 permits separate calculations of the different two coefficients used to eliminate the crosstalk from the composite video signal to the multiplex signal and the ghost of the multiplex signal in the respective coefficient controllers 114 and 134, whereby the crosstalk from the composite video signal to the multiplex signal and the ghost of the multiplex signal may be removed in a short time.

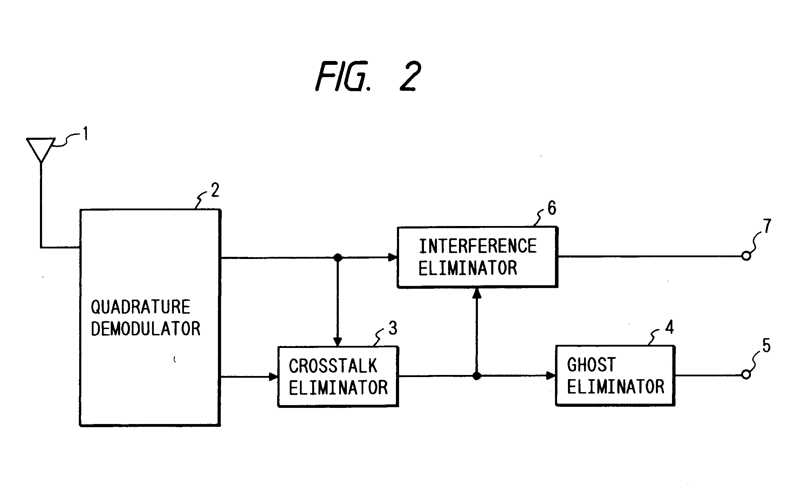

Description will be hereinafter made of a waveform equalizer according to a second embodiment of this invention referring to the drawings. FIG. 8 is a block diagram of a transmitter according to this invention. As having been described in the description of the first embodiment, structure of the circuit and its operation of the transmitter will be here omitted. FIG. 9 is a block diagram of a quadrature demodulator according to this invention as the first means to solve the above cited problem. Structure of the circuit and its operation of the quadrature demodulator will be here omitted as having been described in the description of the first embodiment. FIG. 2 is a block diagram of a waveform equalizer according to a second embodiment of this invention. In FIG. 2, the waveform equalizer comprises a receiving antenna 1, a quadrature demodulator 2, a crosstalk eliminator 3, a ghost eliminator 4, a multiplex signal output terminal 5 outputting a waveform-equalized multiplex signal, an interference eliminator 6 and a composite video signal output terminal 7 outputting a waveform-eqalized composite video signal.

Hereinafter, description will be made of a mutual relationship among the above elements and their operations. The antenna 1 receives a transmitted composite demodulated signal. The quadrature demodulator 2 separates the received composite demodulated signal into a composite video signal and a multiplex signal and demodulates them. The crosstalk eliminator 3 separately receives the composite video signal and the multiplex signal from the quadrature demodulator 2, and outputs a signal in which crosstalk from the composite video signal to the multiplex signal has been eliminated. The ghost eliminator 4 outputs a signal that has been obtained by eliminating ghost from an output of the crosstalk eliminator to the waveform-equalized multiplex signal output terminal 5. The interference eliminator 6 receives the composite video signal and an output from the crosstalk eliminator 3 to output a signal in which both of the ghost of the composite video signal and the crosstalk from the multiplex signal to the composite video signal have been removed to the waveform-eqalized composite video signal output terminal 7.

Incidentally, the internal structures of the crosstalk eliminator 3 and the ghost eliminator 4 are shown in FIGS. 4 and 5, respectively. As having been made in the description of the first embodiment, description of the internal structures and operations of the crosstalk eliminator 3 and the ghost eliminator 4 will be omitted here.

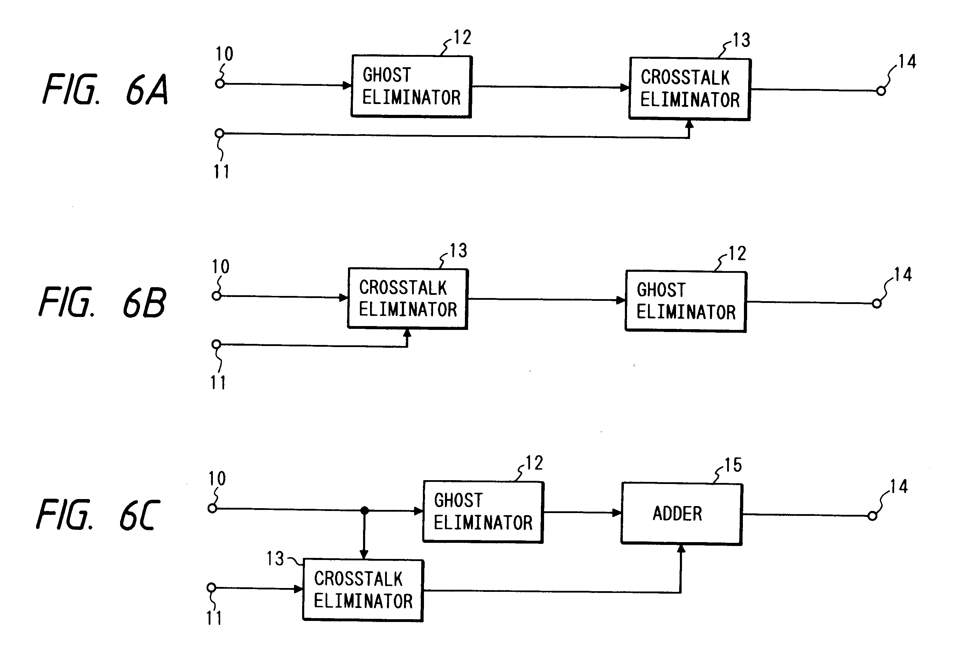

FIG. 6(a) is a block diagram showing an example of an internal structure of the interference eliminator 6. In FIG. 6, the interference eliminator 6 comprises a composite video signal input terminal 10, a multiplex signal input terminal 11, a ghost eliminator 12, a crosstalk eliminator 13 and a waveform-equalized composite video signal output terminal 14. The ghost eliminator 12 eliminates ghost from a signal supplied from the composite video signal input terminal 11. The crosstalk eliminator 13 receives a signal outputted from the multiplex signal input terminal 11 and an output from the ghost eliminator 12, and eliminates crosstalk from the multiplex signal to the composite video signal. Operations of the ghost eliminator 12 and the crosstalk eliminator 13 will be now described in detail. When crosstalk and ghost generate between an encoded video signal and a multiplex signal, the crosstalk and the ghost as shown in FIG. 7 appear in a GCR signal and a multiplex GCR signal. If these waveforms shown in FIG. 7 is once reformed in waveforms shown in FIG. 32, the crosstalk and ghost between the encoded vide signal and the multiplex signal could have been eliminated. In the case of elimination of ghost of a composite video signal, the first step is to detect a period for which the GCR signal shown in FIG. 7 is superimposed from a signal supplied from the composite video signal input terminal 10, then carry out a calculation according to Formula (1). A signal determined through Formula (1) includes components of only the composite video signal and its ghost. The coefficient control circuit 134, therefore, determines a coefficient that is used to eliminate the ghost of the composite video signal by using a signal determined by the Formula (3), and outputs it to each of the multipliers 125, 126, 127 and 128. In the case of elimination of crosstalk from a multiplex signal to a composite video signal, the first step is to detect a period for which the GCR signal shown in FIG. 7 is superimposed from a signal applied from the composite video signal input terminal 10, then carry out a calculation shown by the following Formula (4):

$$(Fm2 - Fm4 + Fm5 - Fm7)/4 \quad (4)$$

The next step is to detect a period for which a multiplex GCR signal shown in FIG. 7 from a signal applied from the multiplex signal input terminal 11, then carry out a calculation according to Formula (3). A signal determined through Formula (4) is the crosstalk of the signal determined by Formula (3) to the composite video signal. In other words, this signal includes components of only the crosstalk from the multiplex signal to the composite video signal. The coefficient controller 114, therefore, determines a coefficient which is of an inverse characteristic of the crosstalk from the multiplex signal to the composite video signal by using signals determined through Formulae (4) and (3), and outputs it to each of the multipliers 105, 106, 107 and 108.

The above steps are repeated until both the crosstalk from the composite video signal to the multiplex signal and the ghost of the composite video signal both become minimal.

The above operation performed in the circuit shown in FIG. 2 permits the different coefficient controllers 114,134 to calculate separately the coefficients used to eliminate crosstalk from the composite video signal to the multiplex signal and ghost of the multiplex signal so that both the crosstalk from the composite video signal to the multiplex signal and the ghost of the multiplex signal may be eliminated in a short time.

This also permits simultaneous elimination of the ghost of the composite video signal and the crosstalk from the multiplex signal to the composite video signal.

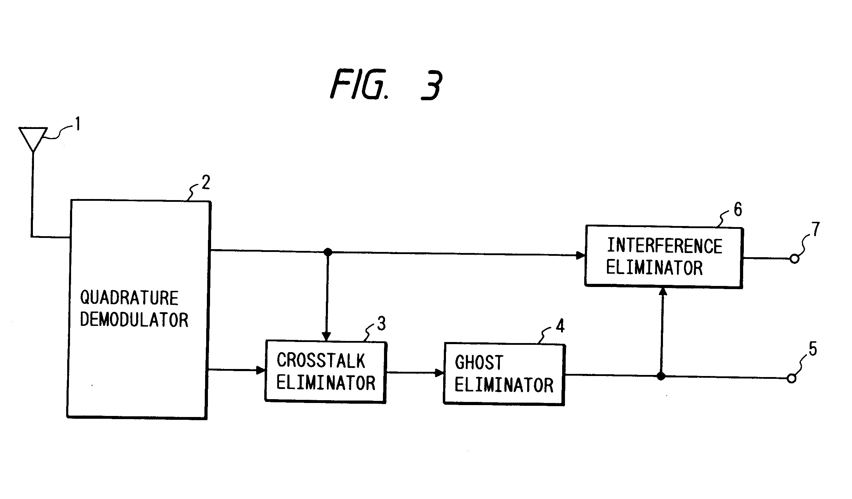

Hereinafter, description will be made of a waveform equalizer according to a third embodiment of this invention referring to the drawings. FIG. 8 is a block diagram of the transmitter according to this invention. Description of the circuit structure and its operation of the waveform equalizer in FIG. 8 will here be omitted as having been already made in terms of the first embodiment. FIG. 9 is a block diagram of the quadrature demodulator according to this invention. Description of the circuit structure and its operation of the quadrature demodulator in FIG. 9 will also be omitted as having been made in terms of the first embodiment. FIG. 3 is a block diagram of a waveform equalizer according to the third embodiment of this invention. In FIG. 3, the waveform equalizer comprises a receiving antenna 1, a quadrature demodulator 2, a crosstalk eliminator 3, a ghost eliminator 4, a waveform-equalized multiplex signal output terminal 5, an interference eliminator 6 and a waveform-equalized composite video signal output terminal 7.

Hereinafter, description will be made of a mutual relationship among the above elements and their operations. The antenna 1 receives a transmitted modulated composite signal. The quadrature demodulator 2 separates the incoming composite modulated signal into a composite video signal and a multiplex signal and demodulates them. The crosstalk eliminator 3 receives both the composite video signal and a multiplex signal and outputs a signal in which crosstalk from the composite video signal to the multiplex signal has been eliminated. The ghost eliminator 4 outputs a signal obtained by eliminating ghost from an output of the crosstalk eliminator 3 to the waveform equalized multiplex signal output terminal 5. The interference eliminator 6 receives both the composite video signal and an output from the ghost eliminator 4, and outputs a signal in which the ghost of the composite video signal and the crosstalk from the multiplex signal to the composite video signal have been eliminated to the waveform equalized composite video signal output terminal 7.

Meanwhile, internal structures of the crosstalk eliminator 3 and the ghost eliminator 4 are shown in FIGS. 4 and 5, respectively. Description of the internal structures of the crosstalk eliminator 3 and the ghost eliminator 4 are here omitted as having been made with respect to the first embodiment.

FIG. 6A is a block diagram showing an internal structure of the interference eliminator 6. Description of the internal structure of the interference eliminator 6 is here omitted as having been made with respect to the second embodiment. When crosstalk and ghost are generated between a decoded video signal and a multiplex signal, the crosstalk and ghost appear in a GCR signal and a multiplex GCR signal as shown in FIG. 7. If waveforms shown in FIG. 7 are once reformed to waveforms shown in FIG. 32, this means that the crosstalk and the ghost between the decoded video signal and the multiplex signal could have been eliminated. In the case of elimination of ghost of the composite video signal, a first step is to detect a period for which the GCR signal shown in FIG. 7 is superimposed from a signal supplied from a composite video signal input terminal 10, then carry out a calculation shown according to Formula (1). A signal determined through Formula (1) includes only the composite video signal and its ghost. The coefficient controller 134, therefore, determines a coefficient used to eliminate the ghost of the composite video signal by using a signal determined through Formula (3), and outputs it to each of multipliers 125, 126, 127 and 128. In the case of elimination of the crosstalk from the multiplex signal to the composite video signal, the first step is to detect a period for which the GCR signal shown in FIG. 7 is superimposed from a signal supplied through the composite video signal input terminal 10, then carry out a calculation according to Formula (4). The next step is to detect a period for which the multiplex GCR signal shown in FIG. 7 is superimposed from a signal supplied through the multiplex signal input terminal 11, then carry out a calculation shown according to Formula (3). A signal determined through Formula (4) is crosstalk of a signal determined through Formula (3) to the composite video signal. In other words, the signal includes only the crosstalk from the multiplex signal to the composite video signal. The coefficient controller 114, therefore, determines a coefficient that is of an inverse characteristic of the crosstalk from the multiplex signal to the composite video signal by using a signal determined through Formulae (4) and (3), then outputs it to each of the multipliers 105, 106, 107 and 108.

The above steps are repeated until the crosstalk from the composite video signal to the multiplex signal and the ghost of the composite video signal become minimal.

Execution of the above operation in the circuit having a structure shown in FIG. 3 allows the two coefficients used to effectively eliminate the crosstalk from the composite video signal to the multiplex signal and the ghost of the multiplex signal to be separately calculated in the different coefficient controllers 114,134, whereby the crosstalk from the composite video signal to the multiplex signal and the ghost of the multiplex signal may be eliminated in a short time.

This also allows the ghost of the composite video signal and the crosstalk from the multiplex signal to the composite video signal to be simultaneously eliminated.

In the first, second and third embodiments, the internal structure of the crosstalk eliminating circuit 3 is not limited to only what is shown in FIG. 4. The internal structure of the ghost eliminating circuit is also not limited to only what is shown in FIG. 5. In the first, second and third embodiments, it is, for example, possible to eliminate, at first, the ghost from the multiplex output signal of the quadrature demodulator 2 by the ghost eliminator 4, then eliminate the crosstalk from the composite video signal to the multiplex signal in the crosstalk eliminator 3 using an output from the ghost eliminator 4 and a composite video output signal from the quadrature demodulator 2.

It is also possible in the first, second and third embodiment, to employ one coefficient controller although the two different coefficient controllers 134,114 are separately provided in the ghost eliminator 4 and the crosstalk eliminator 3 in the above first, second and third embodiments.

It is also possible, in the first, second and third embodiments, to supply a composite video signal and a multiplex signal and a waveform equalized multiplex signal as inputs or only a waveform equalized multiplex signal as an input to the coefficient control circuit 114 or 134.

The internal structure of the crosstalk eliminating circuit 13 shown in FIGS. 6A through 6C is not limited to only what is shown in FIG. 4, and the internal structure of the ghost eliminating circuit 12 also shown in FIGS. 6A through 6C is not limited to only what is shown in FIG. 5.

In the second and third embodiments, the internal structure of the interference eliminator 6 may include only the ghost eliminator 12 or the crosstalk eliminator 13.

It is possible to employ only one coefficient controller although the two different coefficient controller 114 and 134 are separately provided in the ghost eliminator 12 and the crosstalk eliminator 13 in the second and third embodiment.

In the second and third embodiment, the internal structure in the interference eliminator 6 may be what is shown in FIG. 6B. Incidentally, in FIG. 6B, the interference eliminator 6 comprises a composite video signal input terminal 10, a multiplex signal input terminal 11, a ghost eliminator 12, a crosstalk eliminator 13 and a waveform equalized composite video signal output terminal 14. In the interference eliminator 6 shown in FIG. 6B, crosstalk from a multiplex signal is first eliminated from a composite video signal, ghost of the composite video signal is then eliminated. When compared with the interference eliminator shown in FIG. 6A, the disturbance eliminating circuit shown in FIG. 6B brings substantially the same effect to eliminate the crosstalk from the multiplex signal and the ghost of the composite video signal.

In the second and third embodiment, the disturbance eliminator 6 may has an internal structure shown in FIG. 6C. In FIG. 6C, the interference eliminator 6 comprises a composite vide signal input terminal 10, a multiplex signal input terminal 11, a ghost eliminator 12, a crosstalk eliminator 13 and an adder 15. In the interference eliminator 6 shown in FIG. 6C, the adder 15 adds a signal that has an inverse characteristic to eliminate crosstalk from a composite video signal to a multiplex signal with a signal in which ghost of the composite video signal has been eliminated. When compared with the interference eliminator shown in FIG. 6A, the interference eliminator shown in FIG. 6C has substantially the same effect to eliminate the crosstalk from the multiplex signal and the ghost from the composite video signal.

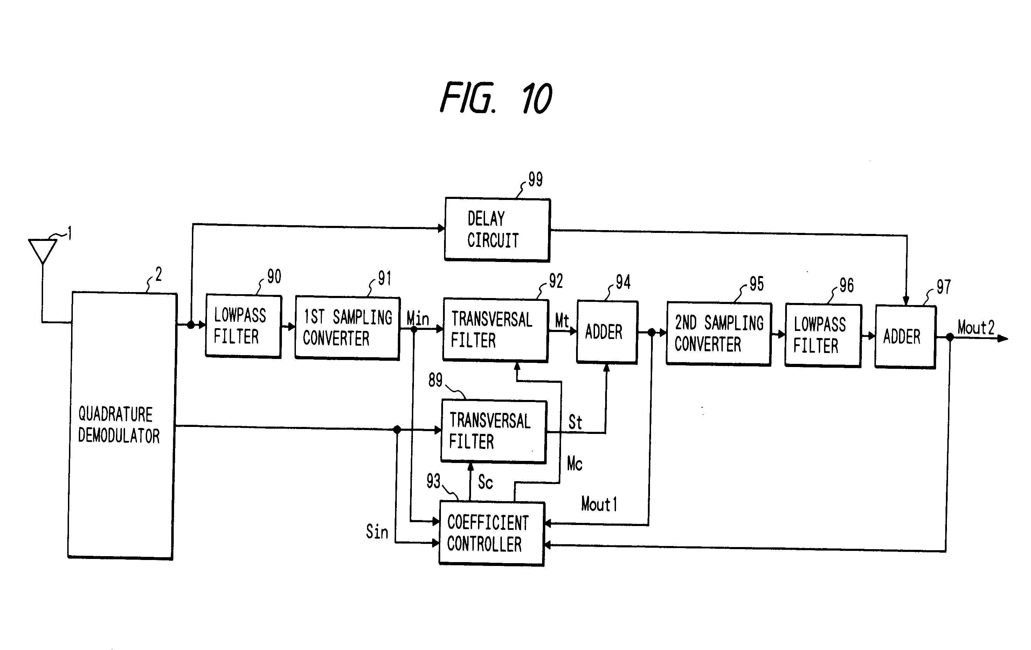

Hereinafter, description will be made of a waveform equalizer according to a fourth embodiment of this invention referring to the drawings. FIG. 10 is a block diagram of the waveform equalizer comprising a receiving antenna 1, a quadrature demodulator 2, a delay circuit 99, lowpass filters 90,96, a first sampling converter 91, transversal filters 89,92, a coefficient controller 93, adders 94,97 and a second sampling converter 95.

Description will be hereinafter described made of a mutual relationship among the above elements and their operations. The antenna 1 receives a transmitted composite modulated signal. The quadrature demodulator 2 separates the received composite modulated signal into a composite video signal and a multiplex signal, then demodulates them. Description of an internal structure and operation of the quadrature demodulator 2 will be here omitted as having been made in terms of the first embodiment. The A-D converter 57 in the quadrature modulator 2 converts said composite video signal into a digital signal of, for example, 8 bit at a sampling frequency f0. As the sampling frequency f0, here is employed, for example, a frequency four times the chrominance subcarrier for reasons of said composite video signal having a frequency band of about 4.2 MHz and a relation with a frequency of the chrominance signal sub-carrier (3.58 MHz). The another A-D converter 58 in the quadrature modulator 2 converts said multiplex signal into a digital signal of 8 bit at a sampling frequency f1. As the sampling frequency f1, here is employed, for example, a frequency 1/4 times the sampling frequency f0 (3.58 MHz), i.e., a frequency of the chrominance subcarrier, for reasons of said multiplex signal having a band of about 1.25 MHz and a relation with the sampling frequency f0. The lowpass filter 90 limits an output from the A-D converter 57 in the quadrature modulator 2 to a band 1/2 times the sampling frequency f1 to avoid development of folder distortion in the first sampling converter 91. The first sampling converter 91 subsamples an output of the lowpass filter 90 so as to sample at a sampling interval equivalent to the sampling frequency f1, and outputs Min. The transversal filter 92 outputs Mt that has an inverse characteristic of a signal having crosstalked from the composite video signal to the multiplex signal by using the output Min from the first sampling converter 91 and an output Mc from the coefficient controller 93.

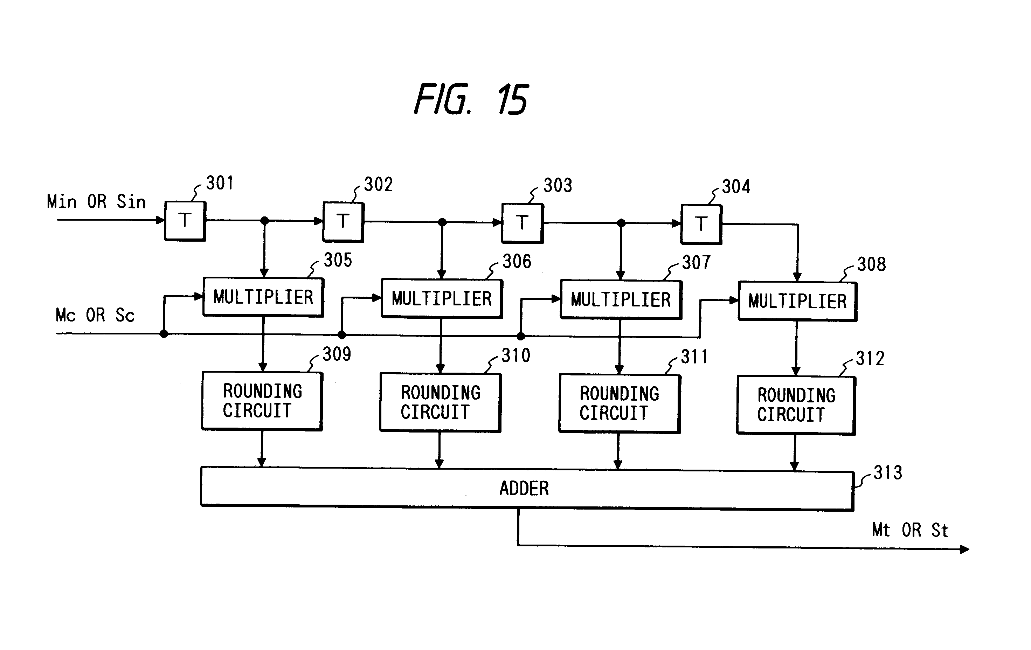

Referring now to FIG. 15, there is shown an internal structure of the transversal filters 89 or 92, which comprises delay elements 301, 302, 303 and 304, multipliers 305, 306, 307 and 308, rounding circuits 309, 310, 311 and 312, and an adder 313. All signal processings inside the transversal filter 89 or 92 are carried out in a form of two's complement in order to treat both positive and negative numbers. For the sake of simplicity, here is employed four delay elements. Here, the transversal filter 89 or 92 is applied a digital signal of 8 bit and a coefficient of 10 bit, and outputs a digital signal of 14 bit. The delay elements 301, 302, 303 and 304 delay a digital signal of 8 bit by one sampling interval and output it to the multipliers 305, 306, 307 and 308, respectively. The multipliers 305, 306, 307 and 308 are in advance set coefficient data therein, respectively. A coefficient Mc or Sc is supplied from the coefficient controller 93. An output from the multiplier 305 is rounded by the rounding circuit 309. Assuming that an output signal of 17 bit is b16, b15, b14,....b1, b0, the multiplier 305 adds 1 to b5 when b4 from b16 to b0 is 1, and outputs 12 bit from b16 to b5. Similarly, each of the rounding circuits 310, 311 and 312 output a signal of 12 bit. The adder 313 sums signals each of 12 bit outputted from the rounding circuits 309, 310, 311 and 312, and outputs a result of 14 bit. In the case of a signal processing in the form of two's complement, a result obtained by multiplying a signal of 8 bit with a signal of 10 bit becomes, in general, 17 bit. In the case of four multipliers, if the outputs from the multipliers are added without rounding-off, a resulting output will be 19 bit. In the case of 64 multipliers, if outputs of the multipliers are added without rounding-off, a resulting output will be 23 bit. In practice, the resulting output is rounded-off to limit the number of bit for the sake of circuit integration. In recently commercially available filter circuits, some rounding-off process is performed to limit the number of output bit. Also, there are presently commercially available various types of filters employing the different number of multipliers such as 4, 16, 32, 64, 128 and so on.

Back to FIG. 10, the transversal filter 89 outputs St that is of an inverse characteristic of a signal having crosstalked from the multiplex signal to the composite video signal to the adder 94 by using an output Sin of the A-D converter 58 and an output Sc of the coefficient controller 93. The adder 94 adds Mt with St, thereby eliminating the crosstalk from the composite video signal to the multiplex signal and outputting an inverse characteristic of the signal having crosstalked from the multiplex signal to the composite video signal to Moutl. Next, the second sampling converter 95 so oversamples the output Moutl of the adder 94 that the output Mout 1 is of the same frequency with the sampling frequency f0 of the A-D converter 57 in the quadrature demodulator 2. The lowpass filter 96 limits a band of the output signal from the second sampling converter 95 to get rid of distortion developed in the second sampling converter 95. An output of the lowpass filter 96 is a signal of a sampling frequency f0, without crosstalk from the composite video signal to the multiplex signal and with an inverse characteristic of a signal having crosstalked from the multiplex signal to the composite video signal. The delay circuit 99 adjusts the delay between an output from the A-D converter 57 and an output of the lowpass filter 96. The adder 97 adds an output from the delay circuit 99 with an output from the lowpass filter 96, and outputs a waveform-equalized composite video signal Mout2 without crosstalk from the multiplex signal to the composite video signal. The coefficient control circuit 93 outputs a coefficient Mc that can realize an inverse characteristic of the crosstalk from the composite signal to the multiplex signal to the transversal filter 92 using an output Min of the first sampling converter 91, an output Sin of the A-D converter 58 in the quadrature converter 2, an output Moutl of the adder 94 and an output Mout2 of the adder 97 besides outputting another coefficient Sc that can realize an inverse characteristic of a signal having crosstalked from the multiplex signal to the composite video signal to the transversal filter 89.

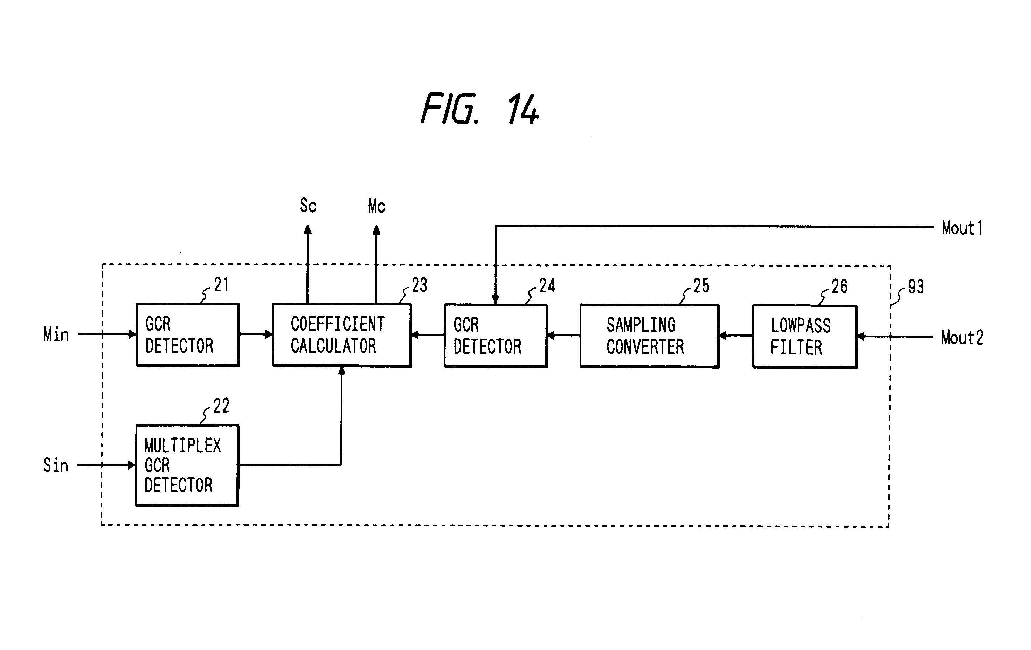

Referring now to FIG. 14, description will be made of an internal structure of the coefficient controller 93. The coefficient controller 93 comprises.a GCR detector 21, a multiplex GCR detector 22, a coefficient calculator 23, another GCR detector 24, a sampling converter 25 and a lowpass filter 26.

In the above arrangement, the multiplex GCR detector 22 pulls out a multiplex GCR signal during one horizontal scanning interval in a predetermined vertical retrace line interval of a digitally converted signal Sin obtained by converting a multiplex signal into a digital signal in the A-D converter 4 and outputs it to the coefficient calculator 23. The GCR detector 21 pulls out a GCR signal during one horizontal scanning interval in a predetermined vertical retrace line interval of an output Min of the first sampling converter 91, and outputs it to the coefficient calculator 23. The lowpass filter 26 limits a band of an output Mout2 of the adder 97 to a frequency not greater than a half of the sampling frequency f1 of the A-D converter 58. The sampling converter 25 subsamples an output of the lowpass filter 26 at the sampling frequency f1. The GCR detector 24 pulls out a GCR signal during one horizontal scanning interval in a predetermined vertical retrace line interval of outputs Mout of the sampling converter 25 and the adder 94, and outputs it to the coefficient calculator 23. An output of the GCR signal detector 21 is a composite video signal before eliminated crosstalk from the multiplex signal to the composite video signal. On the other hand, an output of the GCR detector 24 is a signal after eliminated the crosstalk from the multiplex signal to the composite video signal.

FIG. 7 illustrates a GCR signal and a multiplex signal when crosstalk generates between the composite video signal and the multiplex signals. When crosstalk generates between the demodulated video signal and the multiplex signal, crosstalk appears in the GCR signal and the multiplex GCR signal, as shown in FIG. 7. If the waveforms shown in FIG. 7 are once reformed into waveforms shown in FIG. 32, it means that the crosstalk from the composite video signal to the multiplex signal could have been removed. In the case of elimination of the crosstalk from the composite video signal to the multiplex signal, the GCR detector 21 outputs a signal calculated through Formula (1) to the coefficient calculator 23. The multiplex GCR detector 22 outputs a signal calculated through Formula (2) to the coefficient calculator 23. The GCR detector 24 receives an output from the adder 94 and outputs a signal calculated through Formula (1) to the coefficient calculator 23. The coefficient calculator 23 calculates a quantity of the crosstalk from the composite video signal to the multiplex signal from outputs of the GCR detectors 21,24 and an output of the multiplex GCR detector 22, determines a coefficient to be of an inverse characteristic of the crosstalk, and outputs it to the transversal filter 92. In the case of elimination of crosstalk from the multiplex signal to the composite video signal, the GCR signal detector 21 outputs a signal calculated through Formula (3) to the coefficient calculator 23. The multiplex GCR signal detector 22 outputs a signal calculated through Formula (4) to the coefficient calculator 23. The GCR detector 24 is applied an output from the sampling converter 25, and outputs a signal calculated through Formula (3) to the coefficient calculator 23. The coefficient calculator 23 calculates a quantity of the crosstalk from the multiplex signal to the composite signal from outputs of the GCR signal detectors 21,24 and an output of the multiplex GCR detector 22, determines a coefficient Sc to be of an inverse characteristic of the crosstalk, and outputs it to the transversal filter 89. Above steps are repeated until the signal calculated in the GCR detector 24 becomes minimal, that is, until the crosstalk from the multiplex signal to the composite signal becomes minimal.

The above operation permits the crosstalk from the multiplex signal to the composite video signal to be got rid of.

As obvious from the above description, the present invention allows a large reduction of the number of the multipliers required to eliminate the crosstalk from the multiplex signal to the composite video signal. For instance, if a sampling frequency used to convert a decoded video signal from analog to digital is assumed to be f0 and a sampling frequency used to convert a multiplex signal from analog to digital is assumed to be f1, the required number of the multipliers should be f1/f0. The size of circuit of the waveform equalizer, in general, depends on the number of the multipliers. This invention, therefore, allows the size of the circuit of the waveform equalizer to be largely reduced.

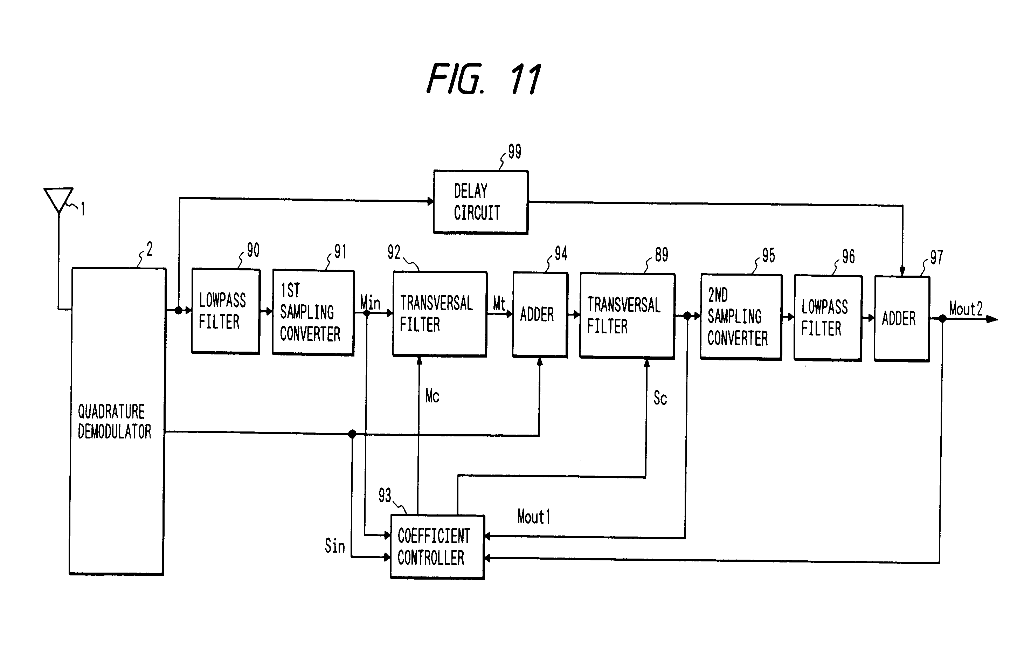

Hereinafter, description will be made of a waveform equalizer according to a fifth embodiment of this invention referring to the drawings. FIG. 11 is a block diagram of the waveform equalizer according to the fifth embodiment of this invention, which comprises a receiving antenna 1, a quadrature demodulator 2, a delay circuit 99, lowpass filters 90,96, a first sampling converter 91, transversal filters 89,92, a coefficient controller 93, adders 94,97 and a second sampling converter 95.

In FIG. 5, the same elements are identified with the same reference numerals of the fourth embodiment and their description will be here omitted. Hereinafter, description will be made of only different points in a mutual relationship among the elements and their operation of the waveform equalizer from the fourth embodiment. The transversal filter 92 outputs a Mt that realizes an inverse characteristic of a signal crosstalked from a composite video signal to a multiplex signal to the adder 94 by using an output Min of the first sampling converter 91 and an output Mc of the coefficient controller 93. The adder 94 adds an output Mt of the transversal filter 92 with an output Sin of the A-D converter 58, and outputs a result to the transversal filter 89. The transversal filter 89 outputs Moutl that realizes an inverse characteristic of a signal crosstalked from the multiplex signal to the composite video signal to the second sampling converter 95, by using an output of the adder 94 and an output Sc of the coefficient controller 93.

As obvious from the above, this invention allows the number of the multipliers required to eliminate the crosstalk from the multiplex signal to the composite video signal to be largely reduced. This invention also allows the coefficients Mc and Sc of the transversal filters to be calculated separately, thereby eliminating crosstalk from the multiplex signal to the composite video signal in a short time.

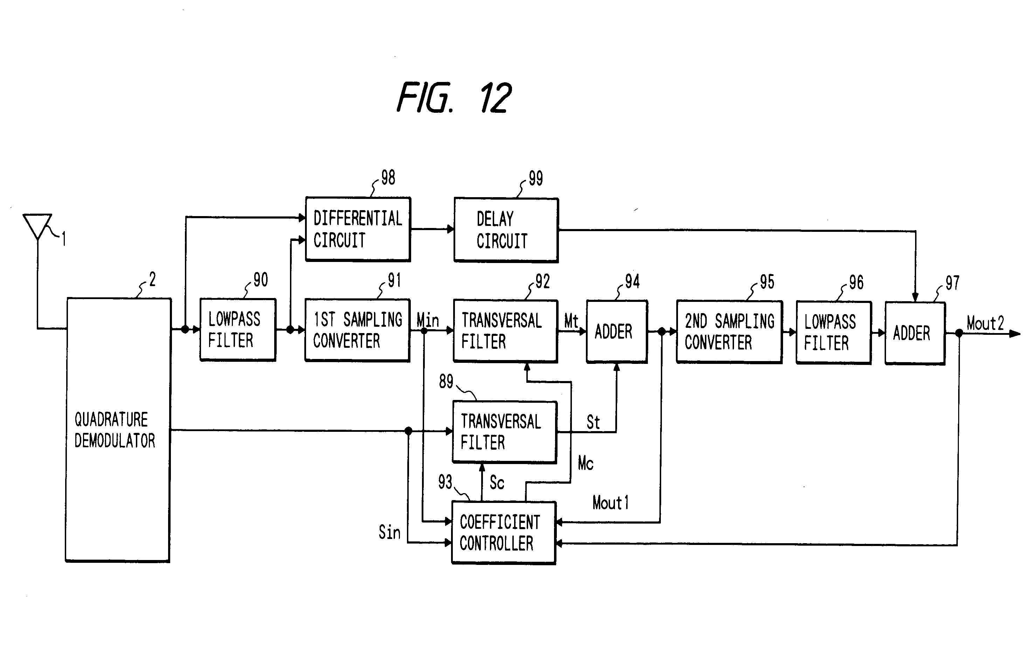

Now description will be made of a waveform equalizer according to a sixth embodiment of this invention referring to the drawings. FIG. 12 is a block diagram of the waveform equalizer according to the sixth embodiment of this invention. In FIG. 12, the same elements are identified with the same reference characters in the fourth embodiment and their description will be here omitted. In FIG. 12, a differential circuit 98 differentiates an output of a lowpass filter 90 from an output of an A-D converter 57 in a quadrature modulator 2 to materialize a highpass filter. A adder 97 adds an output of a delay circuit 99 with an output of the lowpass filter 99 so that a waveform-equalized composite video signal become available. The arrangement of the sixth embodiment has substantially the same efficiency as the fourth embodiment.

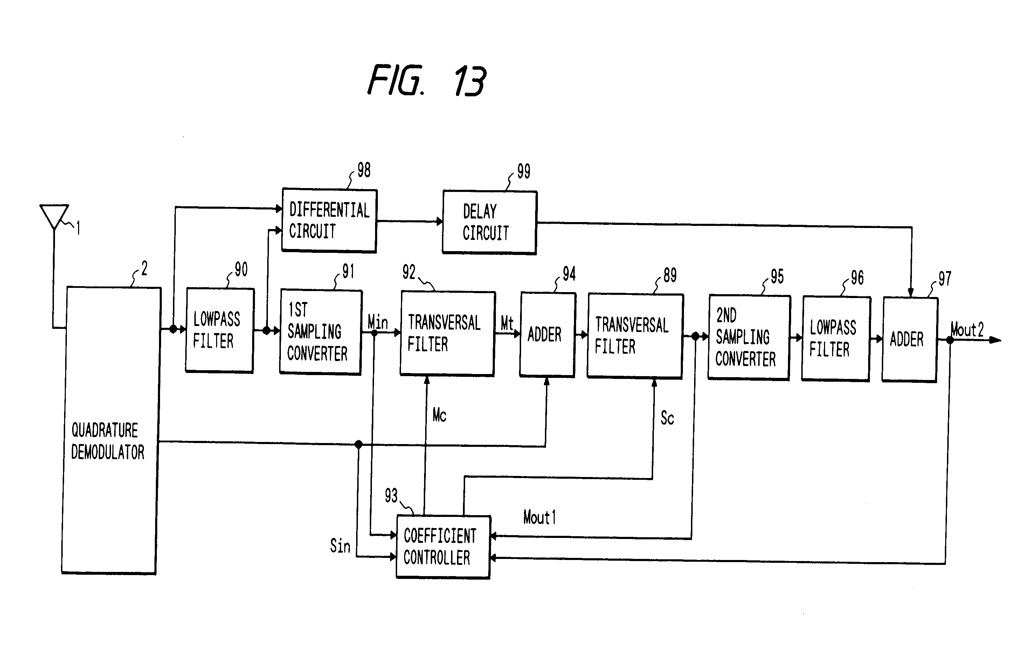

Hereinafter, description will be made of a waveform equalizer according to a seventh embodiment of this invention referring to the drawings. FIG. 13 is a block diagram of the waveform equalizer according to the seventh embodiment of this invention.

Incidentally, the same elements are identified with the same reference characters of the fifth embodiment and their description will be here omitted. In FIG. 13, a differential circuit 98 differentiates an output of a lowpass filter 90 from an output of an A-D converter 57 in an quadrature modulator 2, thereby materializing a highpass filter. A adder 97 adds an output of a delay circuit 99 with an output of the lowpass filter 96 so that a waveform-equalized composite video signal becomes available. The arrangement of the seventh embodiment has substantially the same efficiency as the fifth embodiment.

In the fourth, fifth, sixth and seventh embodiments, it is possible to omit the sampling converter 25 and the lowpass filter 26 to input only the output of the adder 94 to the GCR signal detector 24. In this case, the lowpass filter 26 and the sampling converter 25 can be omitted, whereby a smaller size of the system may be realized.

Also in the fourth, fifth, sixth and seventh embodiments, the sampling frequency f0 is not limited to only an integral multiplex of the sampling frequency f1. The sampling frequency f0 can be a ratio of integers of the sampling frequency f1.

Also in the fourth, fifth, sixth and seventh embodiments, after interpolating the output of the lowpass filter 90, the first sampling converter 91 may execute sampling frequency conversion on it so as to give it a sampling frequency equivalent to the sampling frequency f1.

Also in the fourth, fifth, sixth and seventh embodiments, after interpolating the output of the lowpass filter 26, the sampling converter 25 may execute sampling frequency conversion on it so as to give it a sampling frequency equivalent to the sampling frequency f1.

Also in the fourth, fifth, sixth and seventh embodiments, after interpolating the output of the adder 94, the second sampling converter 95 may execute sampling conversion on it so as to a sampling frequency equal to the sampling frequency f0.

Meanwhile, in the fourth, fifth, sixth and seventh embodiments, the internal arrangement of the coefficient controller 93 is not limited to only what is shown in FIG. 14. The inputs to the coefficient controller 93 need not all Min, Sin, Mout1 and Mout2 as stated in the description of the fourth embodiment.

Also in the fourth, fifth, sixth and seventh embodiments, the coefficient controller 93 may output the coefficients Mc and Sc with at least one input of either Mout1 or Mout2.

Moreover, the internal structures of the transversal filters 89,92 is not limited to only what is shown FIG. 15.

Next description will be made of a waveform equalizer according to an eighth embodiment of this invention referring to the drawings.

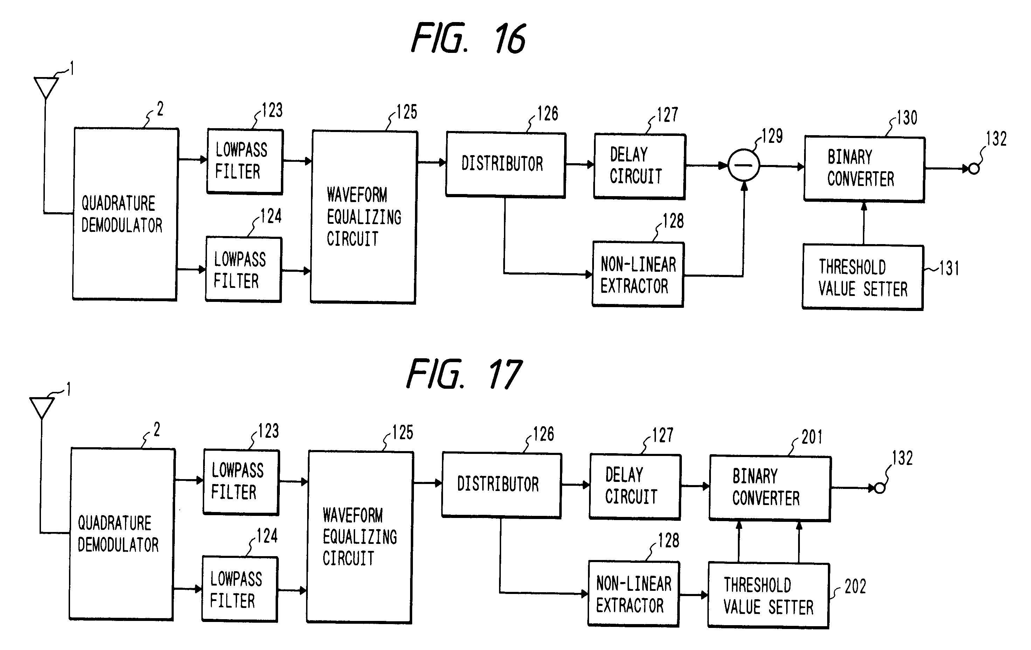

FIG. 16 is a block diagram of the waveform equalizer according to the eighth embodiment of this invention, which comprises a receiving antenna 1, a quadrature demodulator 2, lowpass filters 123,124, a waveform equalizing circuit 125, a distributor 126, a delay circuit 127, a non-linear extractor 128, a subtractor 129, a binary converter 130, a threshold setter 131, a threshold setter 131 and a multiplex signal output terminal 132.

Hereinafter, a mutual relationship among the above elements and their operation will be described. The quadrature demodulator 2 separates an output from the receiving antenna 1 into a composite video signal and a multiplex signal, and demodulates them. Description of an internal arrangement and operation of the quadrature demodulator 2 is here omitted as having been already made with respect to the first embodiment.

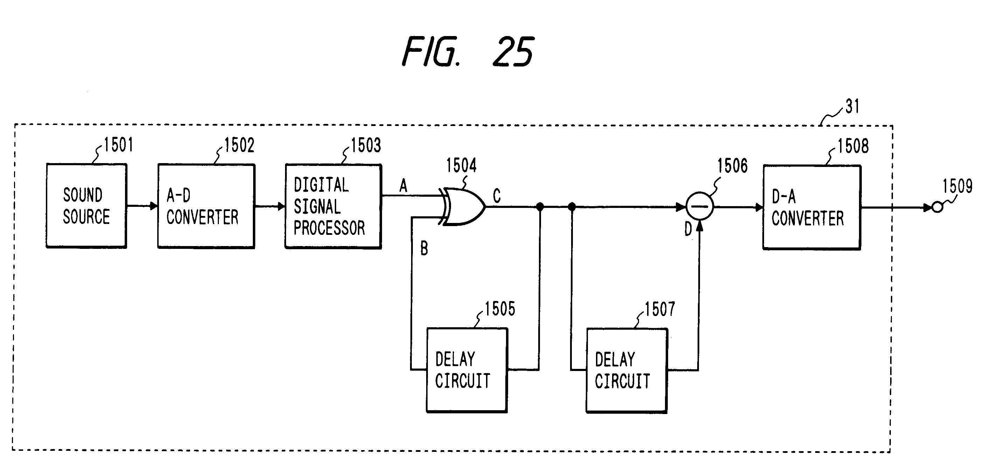

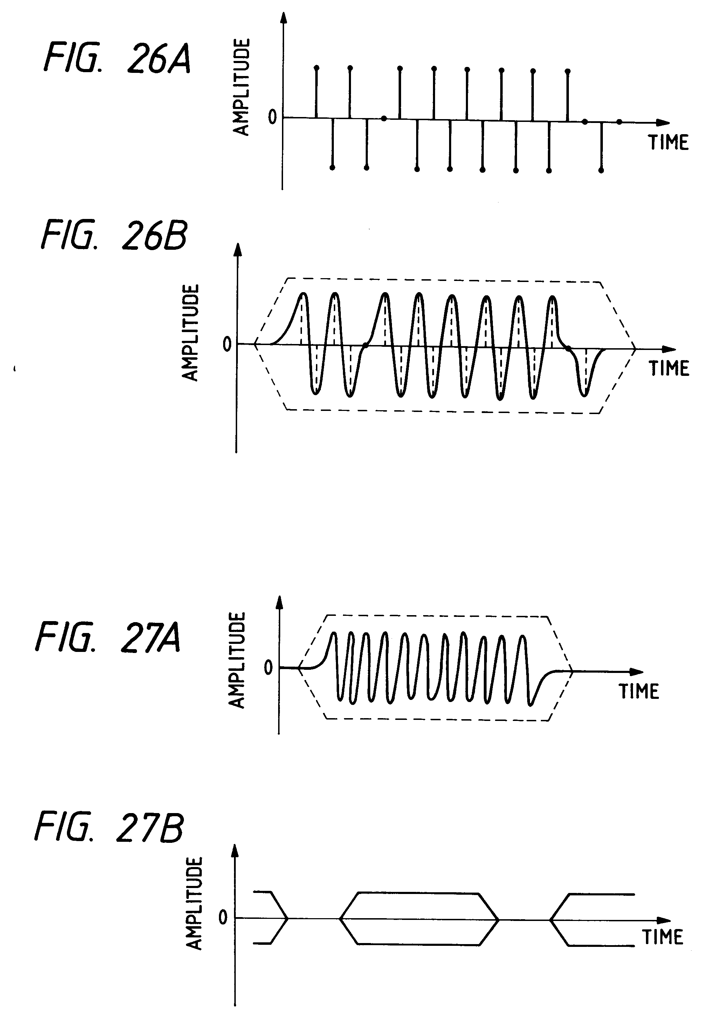

It is here assumed that the multiplex signal source 31 shown in FIG. 8 has a structure shown in FIG. 25. Now detailed description will be made of the multiplex signal source 31. As previously stated, an example of the structure of the multiplex signal source 31 is shown in FIG. 25. In FIG. 25, the multiplex signal source 31 comprises a sound source 1501, an A-D converter 1502, a digital signal processor 1503, an adder 1504, a delay circuit 1505, a subtractor 1506, a D-A converter 1508 and a multiplex signal source output terminal 1509. An analog sound signal is outputted from the sound source 1501 and converted by the A-D converter 1505 into a binary digital signal of 1 and 0 to be outputted to the digital signal processor 1503. The output of the digital signal processor 1503 is added an error correcting code and the like in the digital signal processor 1503 and outputted to the adder 1504. The adder 1504 EXCLUSIVE ORs an output of the digital signal processor 1503 and an output of the delay circuit 1505, and outputs a result to the delay circuits 1505,1507 and the subtractor 1506. A signal fed to the delay circuit 1505 is delayed a predetermined period, and outputted to the adder 1504. A signal fed to the delay circuit 1507 is delayed a predetermined period and outputted to the subtractor 1506. The subtractor 1506 subtracts an output data of the delay circuit 1507 from an output data of the adder 1504, and outputs a result to the D-A converter 1508. The D-A converter 1508 converts a received ternary digital signal of 1, 0 and -1 into an analog signal, and outputs a converted signal to the multiplex signal source output terminal 1509. FIG. 26A schematically shows a digital signal waveform in the form of 1, 0 and -1 before D-A converted, while FIG. 26B schematically shows an analog signal after D-A converted. An output signal from the multiplex signal source output terminal 1509 does not have direct current components because of the above process. A sound signal converted into an analog form is outputted from a multiplex signal source 1003 in a transmitter 1001. A signal outputted from the multiplex signal source 31 is finally transmitted from the transmitting antenna 45 shown in FIG. 8. The receiving antenna 1 receives a transmitted composite modulated signal. The quadrature demodulator 2 separates the received composite modulated signal into a composite video signal and a multiplex signal, and demodulates them. The lowpass filter 124 outputs a signal whose unnecessary high frequency components outside a band of the multiplex signal have been got rid of to the waveform equalizing circuit 125. The lowpass filter 123 outputs a signal whose unnecessary high frequency components outside a band of the composite video signal have been got rid of to the waveform equalizing circuit 125. The waveform equalizing circuit 125 outputs a signal whose linear components of crosstalk from the composite video signal to the multiplex signal and ghost of the multiplex signal have been got rid of. The distributor 126 outputs an output of the waveform equalizing circuit 125 to the delay circuit 127 and the non-linear extractor 128. The delay circuit 127 delays an output of the distributor 126 a predetermined period, and outputs it to the subtractor 129. The non-linear extractor 128 extracts non-linear components in the crosstalk from the composite video signal to the multiplex signal from an output of the distributor 126, and outputs them to the subtractor 129. The subtractor 129 subtracts an output of the non-linear extractor 128 from an output of the delay circuit 127, and outputs a result to the binary converter 130. The threshold setter 131 sets a threshold value, and outputs it to the binary converter 130. The binary converter 130 converts an output of the subtractor 129, and outputs a converted signal to the multiplex signal output terminal 132.

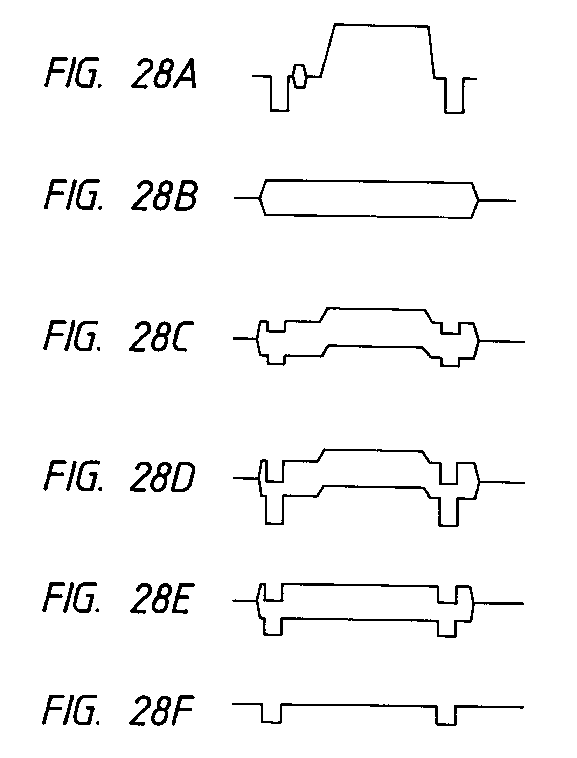

Hereinafter, detailed description will be made of how the multiplex signal is restored in the eighth embodiment of this invention. A received multiplex signal is separated from a composite video signal, and demodulated by the quadrature demodulator 2. Supposing that a multiplex signal shown in FIG. 27B is restored, for instance. FIG. 27B illustrates a multiplex signal waveform on which data are superimposed. FIG. 27B expediently shows how the multiplex signal is outputted from the quadrature demodulator 2. FIGS. 28A through 28F show the quadrature-demodulated composite signal and the multiplex signals. Supposing that the composite video signal shown in FIG. 28A and the multiplex signals shown in FIGS. 28B through 28D are demodulated by the quadrature demodulator 2. FIGS. 28B through 28D depict the multiplex signal on which data are superimposed. Waveforms shown in FIGS. 28C and 28D are distorted due to crosstalk from the composite video signal in a transmission line. FIG. 28C shows a waveform distorted due to linear crosstalk from the composite video signal to the multiplex signal. FIG. 28D is an example of a waveform affected by linear distortion in a portion of synchronizing signal shown in FIG. 28A. The multiplex signals shown in FIGS. 28B through 28D are eliminated their unnecessary high frequency components by the lowpass filter and outputted to the waveform equalizing circuit 125. The waveform equalizing circuit 125 gets rid of ghost of the multiplex signal and linear components of crosstalk from the composite video signal to the multiplex signal. As a consequence, when the linear crosstalk is completely removed from the waveform shown in FIG. 28C, the waveform becomes one shown in FIG. 28B. On the other hand, when non-linear components of the crosstalk appearing in the vicinity of the synchronous signal is not removed from the waveform shown in FIG. 28D, the waveform becomes one shown in FIG. 28E where the non-linear components of the crosstalk remain in the multiplex signal. In the above cases, description has been made when the non-linear crosstalk appears while the data are superimposed on the multiplex signal. This is the quite same as the case of the crosstalk appearing while no data is superimposed. FIG. 28F shows a multiplex signal where non-linear crosstalk appearing while no data is superimposed have not been removed by the waveform equalizer and still remains. The non-linear extractor 128 extracts a waveform of the multiplex signal with no data being superimposed thereon as shown in FIG. 28F. The subtractor 129 subtracts the waveform shown in FIG. 28F from the waveform shown in FIG. 28E. As a result, if the non-linear distortion is kept in the same waveform after the lapse of a predetermined period, the waveform shown in FIG. 28B can be obtained where a multiplex signal in which the non-linear components of the crosstalk from the composite video signal to the multiplex signal have been eliminated is regenerated. The multiplex signal regenerated in the subtractor 129 is outputted to the binary converter 130. The threshold setter 131 sets a threshold value, and outputs it to the binary converter 130. The binary converter 130 compares the multiplex signal with the threshold value outputted from the threshold setter 131, and converts the multiplex signal into a binary data train of 1 and 0 to restore the transmitted data.

As above, the eighth embodiment of this invention is very effective to obtain a multiplex signal in which the crosstalk from the composite signal to the multiplex signal has been appropriately eliminated.

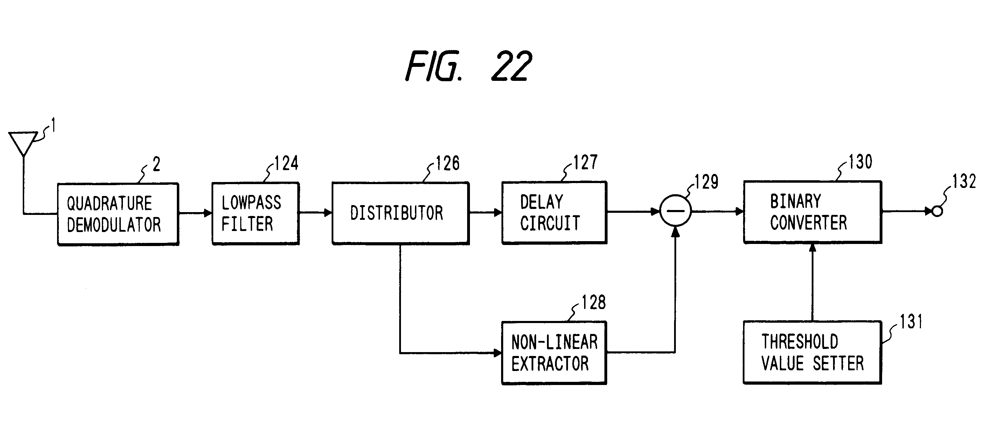

Under a circumstance where no ghost in the multiplex signal develops and crosstalk from the composite signal to the multiplex signal does not have any linear component, the waveform equalizer 125 and the lowpass filter 123 become unnecessary as shown in FIG. 22. In the arrangement shown in FIG. 22, it is possible to eliminate non-linear components of the crosstalk from the composite signal to the multiplex signal to correctly regenerate binary data of 1 and 0, as same as in the above example.

Hereinafter, description will be made of a waveform equalizer according to a ninth embodiment of this invention referring to the drawings. FIG. 17 is a block diagram of a waveform equalizer according to the ninth embodiment of this invention, which comprises a receiving antenna 1, a quadrature demodulator 2, lowpass filters 123,124, a waveform equalizing circuit 125, a distributor 126, a delay circuit 127, a non-linear extractor 128, a binary converter 201, a threshold value setter 202 and a multiplex signal output terminal 132.

A mutual relationship among the above elements and their operation will be next described. The same element are identified by the same reference characters of the eighth embodiment and their explanation will be here omitted. The ninth embodiment is almost the same with the eighth embodiment. Different point is signal processings in the threshold value setter 202 and the binary converter 201. The threshold value setting circuit 202 sets two different threshold values, and outputs them to the binary converter 201. The binary converter 201 converts an output of the delay circuit 127 into binary data of 1 and 0, and outputs the binary data to the multiplex signal output terminal 132.

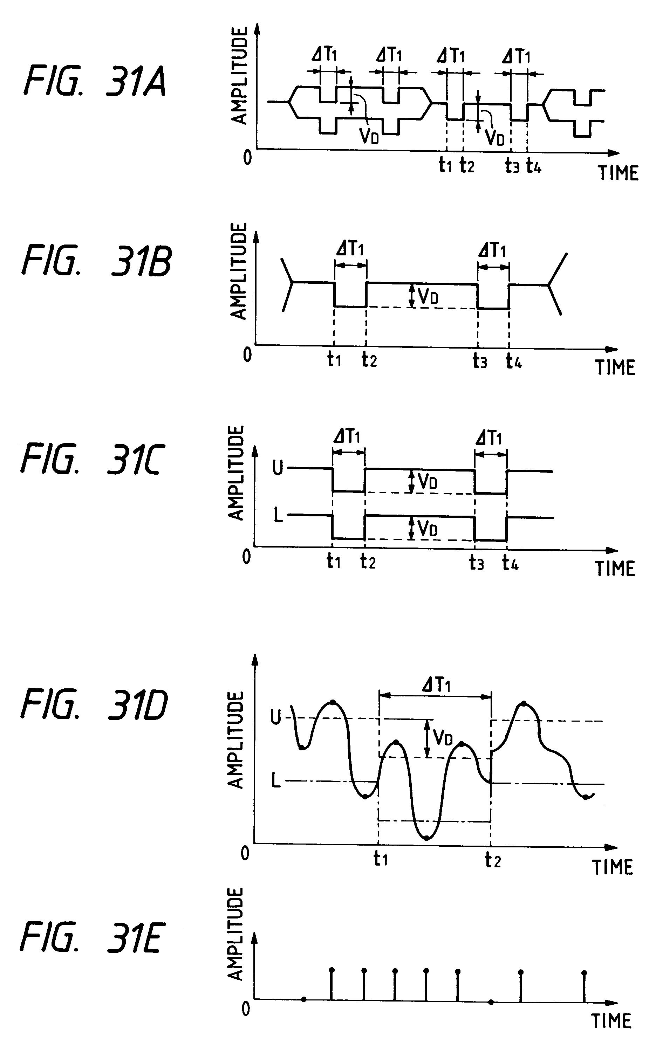

Now detailed description will be made of how the multiplex signal is restored according to the ninth embodiment. A multiplex signal is separated from the composite video signal and demodulated by the quadrature demodulator 2. FIGS. 28A through 28F show a quadrature-demodulated composite video signal and multiplex signals. Supposing that the composite video signal shown in FIG. 28A and the multiplex signals shown in FIGS. 28B through 28D have been demodulated by the quadrature demodulator 2. Description of FIGS. 28A through 28F will be here omitted as having been made with respect to the eighth embodiment. After wave-equalized, the multiplex signal is distributed to the delay circuit 127 and the non-linear extractor 128. The non-linear extractor 128 extracts a multiplex signal waveform on which no data is superimposed as shown in FIG. 28F, and outputs an extracted signal to the threshold value setter 202. Assuming that a multiplex signal waveform shown in FIG. 31A is applied to the delay circuit 127 and the nonlinear extractor 128. FIG. 31A illustrates a multiplex signal waveform in which a signal level for a period $\Delta T1$ falls by VD due to non-linear components of crosstalk from the composite video signal to the multiplex signal remaining even after the waveform equalization. At this time, the non-linear extractor 128 extracts the multiplex signal waveform on which no data is superimposed as shown in FIG. 31B. FIG. 31B depicts an example of a multiplex signal waveform whose signal level falls by VD during a period $\Delta T1$ due to non-linear components of crosstalk from the composite video signal to the multiplex signal remaining after the waveform equalization. The non-linear extractor 128 extracts the multiplex signal as shown in FIG. 31B, and outputs it to the threshold value setter 202. The threshold value setter 202 sets two different threshold values U and L shown in FIG. 31C. Namely, the threshold value setter 202 sets the two threshold values whose signal levels fall by VD during a period $\Delta T1$, and outputs them to the binary converter 201. On the other hand, the delay circuit 127 delays the multiplex signal shown in FIG. 31A a predetermined period, and outputs it to the binary converter 201. If the composite video signal still has the same waveform after delayed said predetermined period, the binary converter 201 compares the input multiplex signal data with the inputted threshold values U and L. That is, the binary converter 201 decides 1 if the data are larger than the threshold value U with the threshold value U being a boundary, deciding 1 if the data are smaller than the threshold value L with the threshold value L being as a boundary, and deciding 0 if the data are not larger than the threshold value U and not smaller than the threshold value L. FIG. 31D shows how to compare the input multiplex signal with the threshold values U and L set in the threshold value setter 202. FIG. 31E shows the multiplex signal converted into binary data of 1 and 0. The binary converter 201 outputs a restored data train to the multiplex signal output terminal 112.

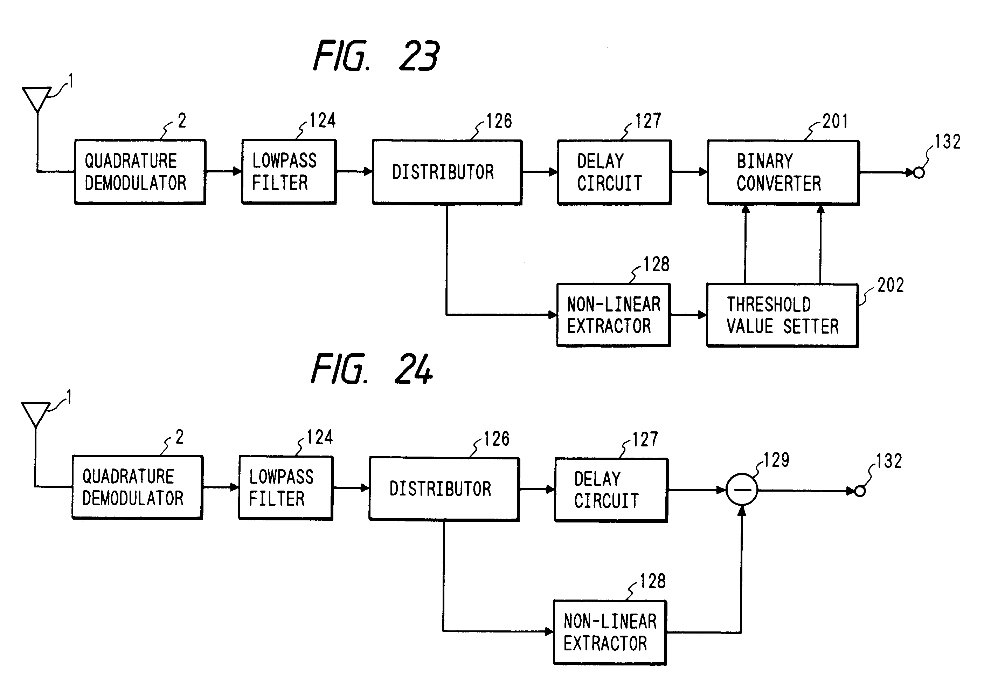

Under a circumstance where no ghost develops in the multiplex signal and crosstalk from the composite video signal to the multiplex signal has no linear component, the waveform equalizing circuit 125 and the lowpass filter 123 become unnecessary as shown in FIG. 23. Such arrangement can accomplish elimination of the crosstalk from the composite video signal to the multiplex signal and correct regeneration of the binary data of 1 and 0.

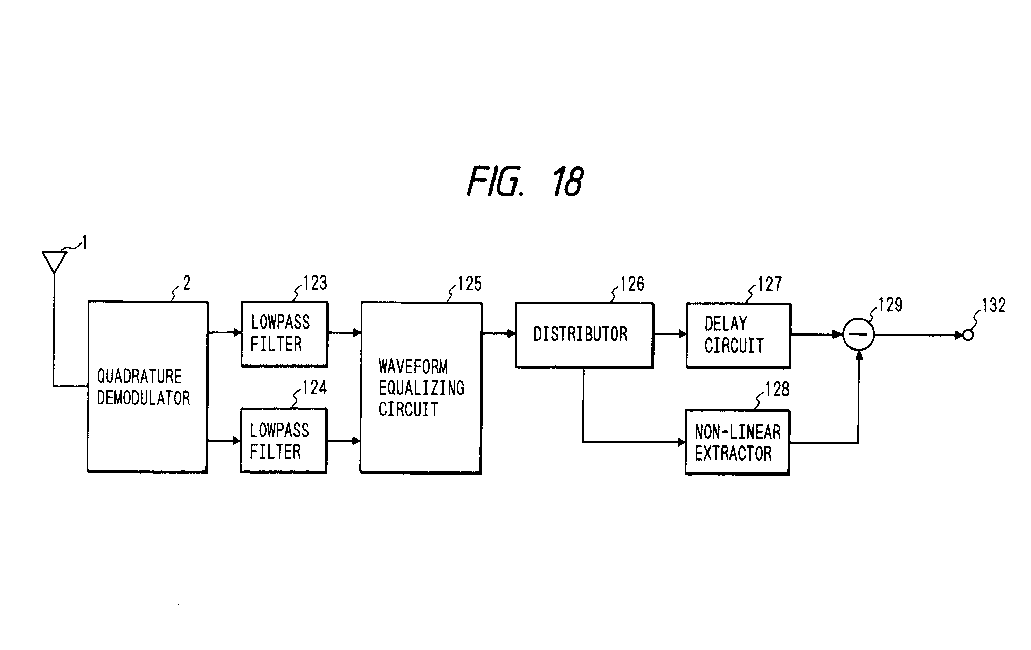

Hereinafter, description will be made of a waveform equalizer according to a tenth embodiment of this invention referring to the drawings. FIG. 18 is a block diagram of the waveform equalizer according to the tenth embodiment of this invention, which comprises a receiving antenna 1, a quadrature demodulator 2, lowpass filters 123,124, a waveform equalizing circuit 125, a distributor 126, a delay circuit 127, a non-linear extractor 128, a subtractor 129 and a multiplex signal output terminal 132. The tenth embodiment is almost the same with the eighth embodiment. Different point is that the threshold value setting circuit 131 and the binary converter 130 are omitted in the tenth embodiment.

The same elements are identified by the same reference characters of the eighth embodiment and their description will be here omitted.

Different point of the tenth embodiment from the eighth embodiment is that the multiplex signal in the tenth embodiment needs not to be specifically a digitally coded sound signal. Since the binary converter 130 and the threshold value setter 131 are not provided in the tenth embodiment, the multiplex signal may be in the form of an analog to improve the picture quality and to expand the aspect ratio.

As above, the tenth embodiment is advantageous to obtain a multiplex signal in which crosstalk from the composite video signal to the multiplex signal is appropriately eliminated.

Under a circumstance where no ghost develops in the multiplex signal and crosstalk from the composite video signal to the multiplex signal has no linear components, the waveform equalizing circuit 125 and the lowpass filter 124 become unnecessary as shown in FIG. 24. With such arrangement, non-linear components of the crosstalk from the composite video signal to the multiplex signal may be got rid of and the transmitted multiplex signal may be correctly regenerated.

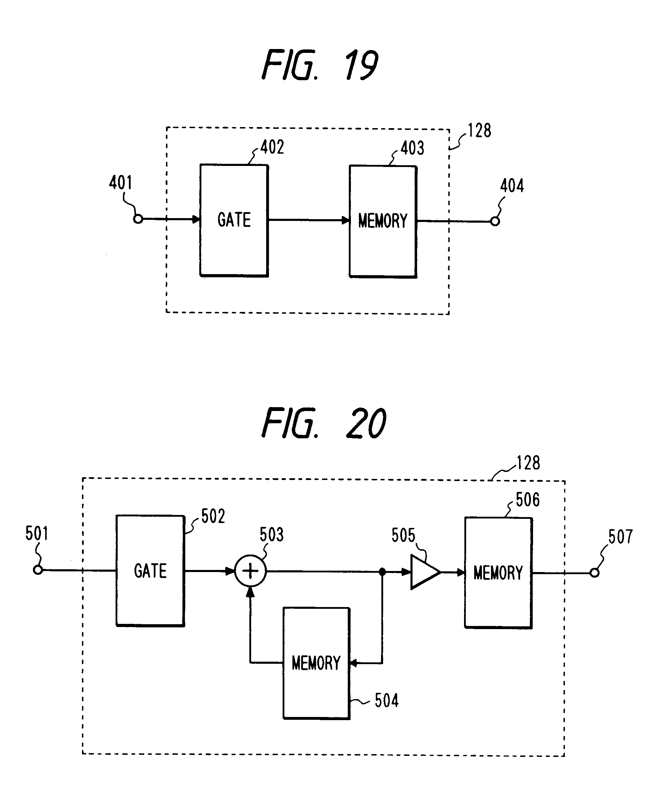

Incidentally, in the eighth, ninth and tenth embodiments, the non-linear extractor 128 may have the arrangement shown in FIG. 19. Signal processings in the non-linear extractor 128 shown in FIG. 19 will be now described. The non-linear extractor 128 shown in FIG. 19 comprises an input terminal 401, a gate 402, a memory 403 and an output terminal 404. A waveform-equalized multiplex signal is inputted to the gate 402 through the input terminal 401. The gate 402 selects a multiplex signal waveform on which no data is superimposed, and outputs it to the memory 403. The memory 403 stores the multiplex signal waveform selected by the gate 402, and outputs it to the output terminal 404.

In the eighth, ninth and tenth embodiments, the period for which no data is superimposed selected by the gate 402 may be one horizontal scanning period in the vertical retrace line interval.

Also in the eighth, ninth and tenth embodiment, the non-linear extractor 128 includes the memory as shown in FIG. 19, it is possible to omit the delay circuit 127.

Also in the eighth, ninth and tenth embodiments, the non-linear extractor 128 may have the structure shown in FIG. 20. Description will be now made of a multiplex signal processing in the non-linear extractor shown in FIG. 20. In FIG. 20, the non-linear extractor 128 comprises an input terminal 501, a gate 502, an adder 503, memories 504,506, a multiplier 505 and an output terminal 507. A waveform-equalized multiplex signal is inputted to the gate 502 through the input terminal 501. The gate circuit 502 selects a multiplex signal whose waveform is distorted due to non-linear crosstalk from the composite video signal, and outputs it to the adder 503. The waveform selected by the gate 502 may, for example, be that appearing in a period shown in FIG. 28E or 28F. The adder 503 adds a waveform outputted from the gate 502 with a waveform outputted from the memory 504. The adder 503 then outputs a resulting waveform obtained by the addition to the memory 504 and the multiplier 505. The memory 504 stores a waveform outputted from the adder 503, and outputs it again to the adder 503. The adder 503 and the memory 504 repeat above operation N times. The multiplier 505 multiplies an output of the adder 503 with 1/N, and outputs a result to the memory 506. The memory 506 stores a waveform outputted from the multiplier 505, and outputs it to the output terminal 507. With the above arrangement, a multiplex signal waveform outputted to the output terminal 507 is shown in FIG. 28F.

In the eighth, ninth and tenth embodiments, the period selected by the gate circuit 502 may be a horizontal scanning interval where the GCR waveform of the composite video signal becomes a pedestal waveform. That is, it may be a period of 281H of Field No. Fs2, 281H of Fs4, 18H of Fs5 or 18H of Fs7 in FIG. 32, since N times addition by the adder 503 causes the multiplex GCR signal waveform to be cancelled so that only non-linear distortion from the composite video signal to the multiplex signal is extracted, whereby a waveform shown in FIG. 28F may be outputted.

Also in the eighth, ninth and tenth embodiments, if the non-linear extractor 128 includes a memory 506, the delay circuit 127 may be omitted.

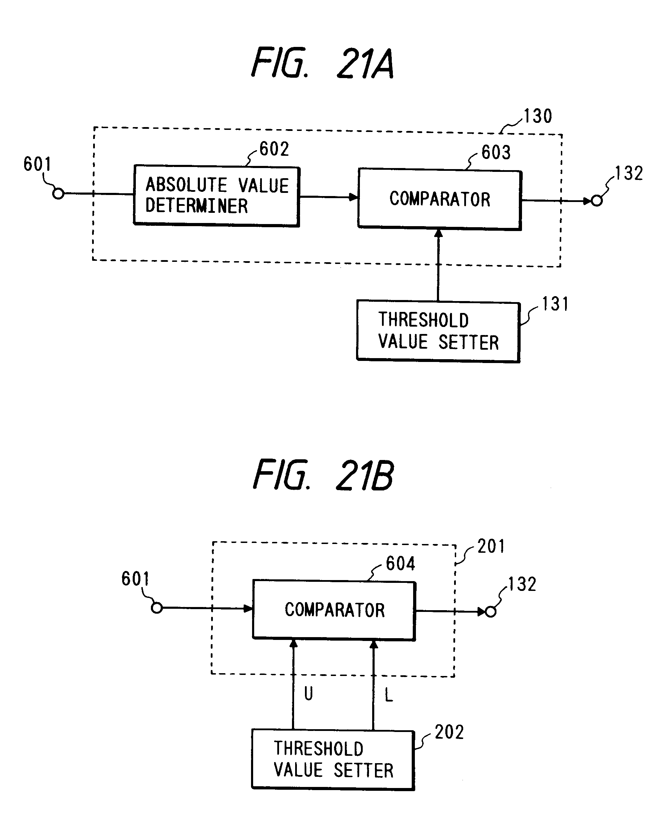

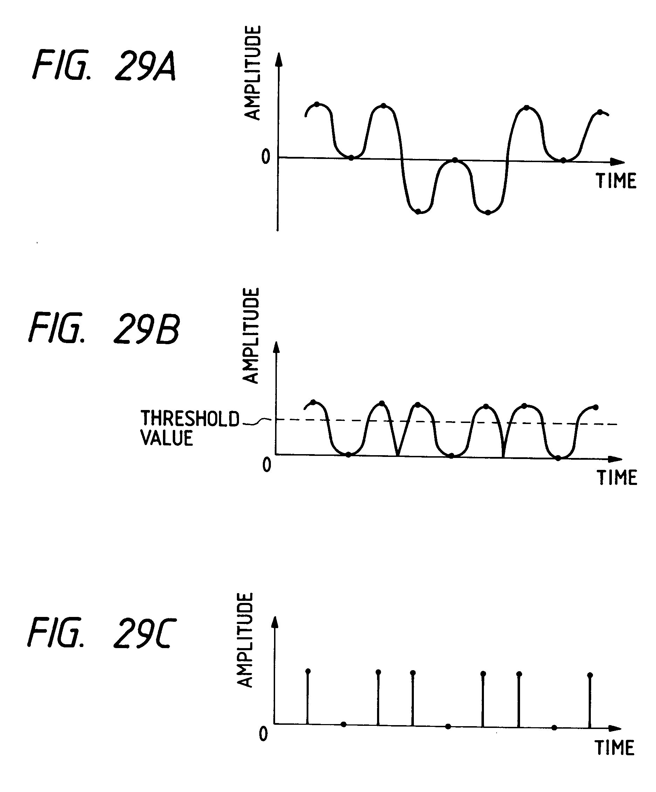

Also in the eighth, ninth and tenth embodiments, the binary converter 130 and the threshold value setter 31 may be what are shown in FIG. 21A. In FIG. 21A, the binary converter 130 comprises, a threshold value setter 131, an input terminal 601, an absolute value determiner 602, a comparator 603 and a multiplex signal output terminal 132. The multiplex signal in which crosstalk from the composite video signal to the multiplex signal has been eliminated is outputted to the absolute value determiner 602 through the input terminal 601. The absolute value determiner 602 determines an absolute value of the multiplex signal and outputs a determined absolute value to the comparator 603. The threshold value setter 131 sets a threshold value, and output it to the comparator 603. The comparator 603 compares data supplied from the absolute value setter 602 with a threshold value set by the threshold value setter 131. The comparator 603 decides 1 if the data are larger than the threshold value with the threshold value being a border, deciding 0 if the data are not larger than the threshold value, then converts the data into a data train of 1 and 0. The multiplex signal processed in the comparator 603 is outputted to the multiplex signal output terminal 132. FIG. 29 schematically depicts the above steps. FIG. 29A shows an example of the multiplex signal inputted to the binary converter 130. FIG. 29B shows how to compare the output of the absolute value determiner 602 with the threshold value set by the threshold value setter 131. FIG. 29C shows the multiplex signal converted into binary data of 1 and 0.

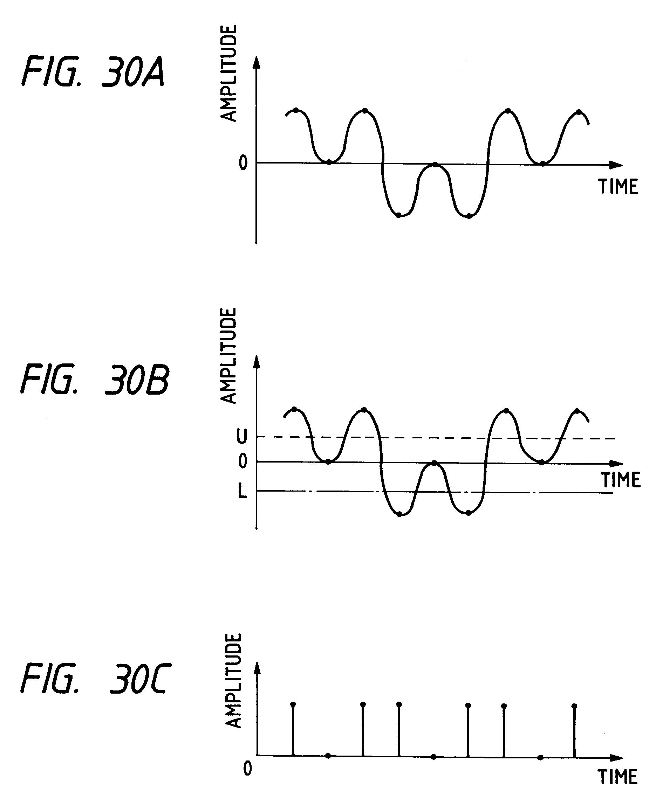

In the eighth, ninth and tenth embodiments, the binary converter 130 and the threshold value setter 131 may be what are shown in FIG. 21B. In FIG. 21B, the binary converter 201 comprises a threshold value setter 202, an input terminal 601, a comparator 604 and a multiplex signal output terminal 132. The multiplex signal in which linear components of the crosstalk from the composite video signal to the multiplex signal have been eliminated is outputted to the comparator 604 through the input terminal 601. The threshold value setter 202 sets two different threshold values, and output them to the comparator 604. For the sake of distinction, either one having a higher signal level between the two threshold values will be hereinafter referred as a threshold value U and the other one having a lower signal level will be referred as a threshold value L. The comparator 604 compares the multiplex signal with the threshold values U and L. That is, the comparator 604 decides 1 if the data are larger than the threshold value U with the threshold value U being a border, deciding 1 if the data are smaller than the threshold value L with the threshold value L being a border and deciding 0 if the data are not larger than the threshold value U and not smaller than the threshold value L. As a result, the multiplex signal is converted into a data train by the comparator 604, and outputted to the multiplex signal output terminal 132. FIG. 20 schematically depicts the above steps. FIG. 30A shows an example of the multiplex signal inputted to the binary converter 201. FIG. 30B illustrates how to compare the multiplex signal with the threshold values U and L set by the threshold value setter 605. FIG. 30C shows the multiplex signal converted into binary data of 1 and 0.

While particular embodiments of the present invention have been shown and described, it is apparent that changes and modifications may be made without departing from this invention in its broader aspects, and therefore, the aim in the appended claims is to cover all such changes and modifications as fall within the true spirit and scope of the invention.

## Claims

1. A waveform equalizer comprising:

a quadrature demodulator for receiving a composite signal composed of a signal obtained by vestigial-sideband modulating a first video carrier with a composite video signal having a first reference signal inserted therein and a signal obtained by carrier-suppression-amplitude modulating a second orthogonal video carrier that is perpendicular to the first video carrier with a multiplex signal having a second reference signal inserted therein, for synchronously detecting a signal converted into a specific frequency with two orthogonal axes and for separately demodulating the composite video signal and the multiplex signal;

crosstalk eliminator means responsive to the composite video signal and the multiplex signal for eliminating crosstalk of the composite video signal in the multiplex signal; and

ghost eliminator means for eliminating ghosts of the multiplex signal from an output of the crosstalk eliminator.

2. A waveform equalizer according to claim 1 and further comprising:

an interference eliminator responsive to the composite video signal and an output of the crosstalk eliminator to eliminate at least one of ghosts of the composite video signal or crosstalk of the multiplex signal in the composite video signal.

3. A waveform equalizer according to claim 1 and further comprising:

an interference eliminator responsive to the composite video signal and an output of the ghost eliminator to eliminate at least one of ghosts of the composite video signal or crosstalk of the multiplex signal in the composite video signal.

4. A waveform equalizer comprising:

a quadrature demodulator for receiving a composite signal composed of a signal obtained by vestigial-sideband modulating a first video carrier with a composite video signal having a first reference signal inserted therein and a signal obtained by carrier-suppression-amplitude modulating a second orthogonal video carrier that is perpendicular to the first video carrier with a multiplex signal having a second reference signal inserted therein, for synchronously detecting a signal converted into a specific frequency with two orthogonal axes and for separately demodulating the composite video signal and the multiplex signal;

a first A-D converted for sampling the composite video signal at a frequency f0 and converting it into a digital signal;

a second A-D converted for sampling the multiplex signal at a frequency f1 and converting it into a digital signal;

a delay circuit for delaying an output of the first A-D converter;

a first lowpass filter for eliminating unnecessary high frequency components from an output of the first A-D converter;

a first sampling converter for converting a sampling frequency of output data of the first lowpass filter;

a first transversal filter responsive to an output of the first sampling converter and at least one coefficient Mc from a coefficient controller;

a second transversal filter responsive to an output of the second A-D converter and at least one coefficient Sc from the coefficient controller;

a first adder for adding an output of the first transversal filter with an output of the second transversal filter;

a second sampling converter for sampling converting output data of the first adder;

a second lowpass filter for eliminating unnecessary signals from an output of the second sampling converter; and

a second adder for adding an output of the second lowpass filter with an output of the delay circuit; whereby

the coefficient controller is responsive to at least one among outputs of the first sampling converter, the second A-D converter, the first adder and the second adder to output the coefficients Mc and Sc.

5. A waveform equalizer comprising:

a quadrature demodulator for receiving a composite signal composed of a signal obtained by vestigial-sideband modulating a first video carrier with a composite video signal having a first reference signal inserted therein and a signal obtained by carrier-suppression-amplitude modulating a second orthogonal video carrier that is perpendicular to the first video carrier with a multiplex signal having a second reference signal inserted therein, for synchronously detecting a signal converted into a specific frequency with two orthogonal axes and for separately demodulating the composite video signal and the multiplex signal;

a first A-D converter for sampling the composite video signal at a frequency f0 and converting it into a digital signal;

a second A-D converter for sampling the multiplex signal at a frequency f1 and converting it into a digital signal;

a first lowpass filter for eliminating unnecessary high frequency components from an output of the first A-D converter;

a subtraction circuit for subtracting an output of the first lowpass filter from an output of the first A-D converter;

a delay circuit for delaying an output of the subtraction circuit;

a first sampling converter for sampling-converting an output of the first lowpass filter;

a first transversal filter responsive to an output of the first sampling converter and at least one coefficient Mc from a coefficient controller;

a second transversal filter responsive to an output of the second A-D converter and at least one coefficient Sc from the coefficient controller;

a first adder for adding an output of the first transversal filter with an output of the second transversal filter;

a second sampling converter for sampling-converting an output of the first adder;

a second lowpass filter for eliminating unnecessary signals from an output of the second sampling converter;

a second adder for adding an output of the first sampling converter with an output of the delay circuit; and

the coefficient controller responsive to at least one among outputs of the first sampling converter, the second A-D converter, the first adder and the second adder to output coefficients Mc and Sc.

6. A waveform equalizer according to claim 4 or 5, wherein the sampling frequency f0 of the first A-D converter is an integral multiple or factor of the sampling frequency f1 of the second A-D converter.

7. A waveform equalizer according to claim 4 or 6, wherein the first sampling converter samples at the frequency fl of the second A-D converter.

8. A waveform equalizer according to claim 4, 5, 6 or 7, wherein the first sampling converter interpolates output data of the first lowpass filter and sampling-converts them into the sampling frequency fl of the second A-D converter.

9. A waveform equalizer according to any one of claims 4 to 8, wherein the first transversal filter realizes an inverse characteristic of crosstalk from the composite video signal to the multiplex signal.

10. A waveform equalizer according to any one of claims 4 to 9, wherein the second transversal filter realizes an inverse characteristic of crosstalk from the multiplex signal to the composite video signal.

11. A waveform equalizer according to any one of claims 4 to 10, wherein the second sampling converter over samples at the sampling frequency f0 of the first A-D converter.

12. A waveform equalizer according to any one of claims 4 to 11, wherein the second sampling converter interpolates output data of the first adder and sampling-converts them into the sampling frequency f0 of the first A-D converter.

13. A waveform equalizer according to any one of claims 4 to 12, wherein the coefficient controller outputs the coefficient Mc used to eliminate crosstalk from the composite video signal to the multiplex signal and the coefficient Sc used to eliminate crosstalk from the multiplex signal to the composite video signal.

14. A waveform equalizer comprising:

a quadrature demodulator for receiving a composite signal composed of a signal obtained by vestigial-sideband modulating a first video carrier with a composite video signal and a signal obtained by carrier-suppression-amplitude modulating a second orthogonal video carrier that is perpendicular to the first video carrier with a multiplex signal, for synchronously detecting the composite signal with two orthogonal axes and for separately demodulating the composite video signal and the multiplex signal;

a first lowpass filter for outputting a first signal in which unnecessary high frequency components have been eliminated from the demodulated composite video signal;

a second lowpass filter for outputting a second signal in which unnecessary high frequency components have been eliminated from the demodulated multiplex signal;

a waveform equalizing circuit responsive to an output of the first lowpass filter and an output of the second lowpass filter to output a waveform-equalized signal;

a distributor for distributing an output of the waveform equalizing circuit;

a delay circuit for delaying a first output of the distributor a predetermined period and outputting it;

a non-linear extractor for extracting non-linear components from a second output of the distributor and outputting it; and

subtracror for subtracting output signal data of the non-linear extractor from output signal data of the delay circuit and outputting a resulting signal data.

15. A waveform equalizer according to claim 14 and further comprising:

a threshold value setter for outputting at least one threshold value; and

a binary converter responsive to output signal data of the substractor and an output of the threshold value setter to convert them into binary data.

16. A waveform equalizer comprising:

a quadrature demodulator for receiving a composite signal composed of a signal obtained by vestigial-sideband modulating a first video carrier with a composite video signal and a signal obtained by carrier-suppression-amplitude modulating a second orthogonal video carrier that is perpendicular to the first video carrier with a multiplex signal, for synchronously detecting the composite signal with two orthogonal axes and for separately demodulating the composite video signal and the multiplex signal;

a first lowpass filter for outputting a first signal in which unnecessary high frequency components have been eliminated from the demodulated composite video signal;

a second lowpass filter for outputting a second signal in which unnecessary high frequency components have been eliminated from the demodulated multiplex signal;

a waveform equalizing circuit responsive to an output of the first lowpass filter and an output of the second lowpass filter to output a waveform equalized signal;

a distributor for distributing an output of the waveform equalizing circuit;

a delay circuit for delaying a first output of the distributor for a predetermined period and outputting it;

a non-linear extractor for extracting non-linear components from a second output of the distributor and outputting it;

a threshold value setter for setting at least one threshold value from an output of the non-linear extractor to outputting it; and

a binary converter responsive to an output of the delay circuit and an output of the threshold value setter to convert them into binary data.

17. A waveform equalizer according to claim 14, 15 or 16, wherein the waveform equalizing circuit is responsive to an output of the first lowpass filter as a first input signal and an output of the second lowpass filter as a second input signal to output a waveform equalized signal in which at least one of crosstalk from the first input signal to the second input signal or ghosts of the second input signal has been eliminated.

18. A waveform equalizer according to any one of claims 14 to 17, wherein the non-linear extractor comprises a gate continuously selecting the multiplex signal for a predetermined period and a memory for receiving an output of the gate and storing it therein.

19. A waveform equalizer according to any one of claims 14 to 17, wherein the non-linear extractor comprises a gate for continuously selecting the multiplex signal for a predetermined period and outputting it, an adder for adding an output of the gate with an output of a first memory, the first memory being for storing an output of the adder therein and outputting it, a multiplier for multiplying the adder with a coefficient and a second memory for storing an output of the multiplier therein and outputting it.

20. A waveform equalizer according to claim 18 or 19, wherein the predetermined period selected by the gate is a period for which no data is superimposed on the multiplex signal.

21. A waveform equalizer according to any one of claims 14 to 20, wherein the binary converter comprises an absolute value determinator for determining an absolute value of an output of the subtractor and a comparator for comparing the threshold value set by the threshold value setter with an output of the absolute value determinator and for outputting a resulting binary data.

22. A waveform equalizer according to claim 15 or 16, or any claim dependent thereon, wherein the binary converter comprises a comparator.

# FIG. 1

EP 0 617 551 A1

# FIG. 2

FIG. 3

EP 0 617 551 A1

EP 0 617 551 A1

## FIG. 4

FIG. 5

EP 0 617 551 A1

FIG. 6A

10

GHOST
ELIMINATOR
12

CROSSTALK
ELIMINATOR
13

14

11

FIG. 6B

10

CROSSTALK
ELIMINATOR
13

GHOST
ELIMINATOR
12

14

11

FIG. 6C

10

GHOST
ELIMINATOR
12

ADDER
15

14

CROSSTALK
ELIMINATOR
13

11

# FIG. 7

| FIELD NO. | GCR SIGNAL | | MULTIPLEX GCR SIGNAL |
|---|---|---|---|

Fm1 — 18H    Fs1 — 18H

Fm2 — 281H    Fs2 — 281H

Fm3    Fs3

Fm4    Fs4

Fm5    Fs5

Fm6    Fs6

Fm7    Fs7

Fm8    Fs8

## FIG. 8

FIG. 9

# FIG. 10

EP 0 617 551 A1

FIG. 11

EP 0 617 551 A1

FIG. 12

EP 0 617 551 A1

# FIG. 13

EP 0 617 551 A1

EP 0 617 551 A1

# FIG. 14

Sc     Mc

Mout 1

Min → **GCR DETECTOR** (21) → **COEFFICIENT CALCULATOR** (23) ← **GCR DETECTOR** (24) ← **SAMPLING CONVERTER** (25) ← **LOWPASS FILTER** (26) ← Mout 2

Sin → **MULTIPLEX GCR DETECTOR** (22) →

93

EP 0 617 551 A1

# FIG. 15

Min OR Sin → [T] 301 → • → [T] 302 → • → [T] 303 → • → [T] 304 →

305 MULTIPLIER   306 MULTIPLIER   307 MULTIPLIER   308 MULTIPLIER

Mc OR Sc →

309 ROUNDING CIRCUIT   310 ROUNDING CIRCUIT   311 ROUNDING CIRCUIT   312 ROUNDING CIRCUIT

313 ADDER

Mt OR St

EP 0 617 551 A1

## FIG. 16

QUADRATURE DEMODULATOR `2`

LOWPASS FILTER `123`

LOWPASS FILTER `124`

WAVEFORM EQUALIZING CIRCUIT `125`

DISTRIBUTOR `126`

DELAY CIRCUIT `127`

NON-LINEAR EXTRACTOR `128`

`129`

BINARY CONVERTER `130`

THRESHOLD VALUE SETTER `131`

`1`

`132`

## FIG. 17

QUADRATURE DEMODULATOR `2`

LOWPASS FILTER `123`

LOWPASS FILTER `124`

WAVEFORM EQUALIZING CIRCUIT `125`

DISTRIBUTOR `126`

DELAY CIRCUIT `127`

NON-LINEAR EXTRACTOR `128`

BINARY CONVERTER `201`

THRESHOLD VALUE SETTER `202`

`1`

`132`

## FIG. 18

EP 0 617 551 A1

# FIG. 19

GATE 402 → MEMORY 403

401 → 404

128

# FIG. 20

GATE 502 → (+) 503 → ▷ 505 → MEMORY 506

501 → 507

MEMORY 504

128

## FIG. 21A

## FIG. 21B

FIG. 22

EP 0 617 551 A1

## FIG. 23

```
1          2              124           126          127              201          132
△  ┌──────────────┐ ┌──────────┐ ┌─────────────┐ ┌──────────┐ ┌──────────────┐   ○
   │ QUADRATURE   │ │ LOWPASS  │ │ DISTRIBUTOR │ │  DELAY   │ │    BINARY    │
   │ DEMODULATOR  │ │ FILTER   │ │             │ │ CIRCUIT  │ │  CONVERTER   │
   └──────────────┘ └──────────┘ └─────────────┘ └──────────┘ └──────────────┘
```

```
                              128                    202
                      ┌──────────────┐       ┌──────────────────┐
                      │ NON-LINEAR   │       │   THRESHOLD      │
                      │ EXTRACTOR    │       │ VALUE SETTER     │
                      └──────────────┘       └──────────────────┘
```

## FIG. 24

```
1          2              124           126          127          129        132
△  ┌──────────────┐ ┌──────────┐ ┌─────────────┐ ┌──────────┐   ⊖          ○
   │ QUADRATURE   │ │ LOWPASS  │ │ DISTRIBUTOR │ │  DELAY   │
   │ DEMODULATOR  │ │ FILTER   │ │             │ │ CIRCUIT  │
   └──────────────┘ └──────────┘ └─────────────┘ └──────────┘
```

```
                              128
                      ┌──────────────┐
                      │ NON-LINEAR   │
                      │ EXTRACTOR    │
                      └──────────────┘
```

# FIG. 25

EP 0 617 551 A1

FIG. 26A

FIG. 26B

FIG. 27A

FIG. 27B

EP 0 617 551 A1

FIG. 28A

FIG. 28B

FIG. 28C

FIG. 28D

FIG. 28E

FIG. 28F

44

FIG. 29A

FIG. 29B

THRESHOLD
VALUE

FIG. 29C

FIG. 30A

FIG. 30B

FIG. 30C

FIG. 31A

FIG. 31B

FIG. 31C

FIG. 31D

FIG. 31E

# FIG. 32
# PRIOR ART

| FIELD NO. | GCR SIGNAL | | MULTIPLEX GCR SIGNAL |
|---|---|---|---|
| Fm1 | 18H | Fs1 | 18H |
| Fm2 | 281H | Fs2 | 281H |
| Fm3 | | Fs3 | |
| Fm4 | | Fs4 | |
| Fm5 | | Fs5 | |
| Fm6 | | Fs6 | |
| Fm7 | | Fs7 | |
| Fm8 | | Fs8 | |

# FIG. 33
# PRIOR ART

EP 0 617 551 A1

71

73
CROSSTALK
ELIMINATOR

72

74
GHOST
ELIMINATOR

75
ADDER

77

76
COEFFICIENT
CONTROLLER

**European Patent Office**

# EUROPEAN SEARCH REPORT

Application Number

EP 94 30 2030

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 484 322 (MATSUSHITA ELECTRIC IND. CO.,LTD.) | 1 | H04N5/21 H04N11/00 |
| A | * page 5, line 1 - page 6, line 38; figures 1-4C * <br> * page 13, line 50 - page 17, line 43; figures 26-28 * | 4,5,14, 16 | |
| A | WO-A-92 03015 (RCA LICENSING CORPORATION) <br><br> * page 6, line 1 - page 11, line 14 * <br> * page 12, line 1 - page 13, line 31; figures 2,3A-3F,5A-5D * | 1,4,5, 14,16 | |
| A | EP-A-0 449 487 (MATSUSHITA ELECTRIC IND. CO.,LTD.) <br> * column 5, line 40 - column 8, line 3; figures 2,7-9 * | 1,4,5, 14,16 | |
| D,A | IEEE TRANSACTIONS ON CONSUMER ELECTRONICS, vol.37, no.4, November 1991 pages 753 - 762 S. KAGEYAMA ET AL. 'WAVEFORM EQUALIZATION FOR EDTV SYSTEM USING QAM' * the whole document * | 1,4,5, 14,16 | TECHNICAL FIELDS SEARCHED (Int.Cl.5) <br><br> H04N |

The present search report has been drawn up for all claims

| Place of search | Date of completion of the search | Examiner |
|---|---|---|
| THE HAGUE | 24 June 1994 | Fuchs, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document